# EUROPEAN PATENT SPECIFICATION

(11) **EP 3 314 401 B1**
(45) Date of publication and mention of the grant of the patent: **12.02.2020**
(21) Application number: 16736333.2
(22) Date of filing: 23.06.2016
(51) Int. Cl.: G06F 9/38, G06F 9/30

(54) **BLOCK-BASED ARCHITECTURE WITH PARALLEL EXECUTION OF SUCCESSIVE BLOCKS**
BLOCKBASIERTE ARCHITEKTUR MIT PARALLELER AUSFÜHRUNG VON AUFEINANDERFOLGENDEN BLÖCKEN
ARCHITECTURE À BASE DE BLOCS AVEC EXÉCUTION PARALLÈLE DE BLOCS SUCCESSIFS

(30) Priority: 26.06.2015 US 201514752636
(43) Date of publication of application: 02.05.2018
(60) Divisional application: 19218262.4
(73) Proprietor: Microsoft Technology Licensing, LLC, Redmond, Washington 98052-6399 (US)
(72) Inventor: BURGER, Douglas Christopher, Redmond, Washington 98052-6399 (US); SMITH, Aaron, Redmond, Washington 98052-6399 (US); GRAY, Jan S., Redmond, Washington 98052-6399 (US)
(74) Representative: CMS Cameron McKenna Nabarro Olswang LLP
(86) International application number: PCT/US2016/038854
(87) International publication number: WO 2016/210031

(56) References cited:
- WO-A1-2013/081556
- US-A1- 2008 235 499
- MIHAI PRICOPI ET AL: "Bahurupi: A Polymorphic Heterogeneous Multi-Core Architecture", ACM TRANSACTIONS ON ARCHITECTURE AND CODE OPTIMIZATION, vol. 8, no. 4, 1 January 2012 (2012-01-01) , pages 1-21, XP055074612, 2 Penn Plaza, Suite 701 New York NY 10121-0701 USA ISSN: 1544-3566, DOI: 10.1145/2086696.2086701

## Description

### BACKGROUND

Microprocessors have benefitted from continuing gains in transistor count, integrated circuit cost, manufacturing capital, clock frequency, and energy efficiency due to continued transistor scaling predicted by Moore's law, with little change in associated processor Instruction Set Architectures (ISAs). However, the benefits realized from photolithographic scaling, which drove the semiconductor industry over the last 40 years, are slowing or even reversing. Reduced Instruction Set Computing (RISC) architectures have been the dominant paradigm in processor design for many years. Out-of-order superscalar implementations have not exhibited sustained improvement in area or performance. Accordingly, there is ample opportunity for improvements in processor ISAs to extend performance improvements.
WO 2013/081556 teaches methods and architecture for dynamic polymorphic heterogeneous multi-core processor operation are provided. The method for dynamic heterogeneous polymorphic processing includes the steps of receiving a processing task comprising a plurality of serial threads. The method is performed in a processor including a plurality of processing cores, each of the plurality of processing cores being assigned to one of a plurality of core clusters and each of the plurality of core clusters capable of dynamically forming a coalition comprising two or more of its processing cores. The method further includes determining whether each of the plurality of serial threads requires more than one processing core, and sending a go-into-coalition-mode-now instruction to ones of the plurality of core clusters for handling ones of the plurality of serial threads that require more than one processing core.
US 2008/235499 teaches a main memory stores cache blocks obtained by dividing a program. At a position in a cache block where a branch to another cache block is provided, there is embedded an instruction for activating a branch resolution routine for performing processing, such as loading of a cache block of the branch target. A program is loaded into a local memory in units of cache blocks, and the cache blocks are serially stored in first through nth banks, which are sections provided in the storage area. Management of addresses in the local memory or processing for discarding a copy of a cache block is performed with reference to an address translation table, an inter-bank reference table and a generation number table.

### SUMMARY

According to aspects of the present invention there is provided a system, method and device as defined in the accompanying claims.

Methods, apparatus, and computer-readable storage devices are disclosed for providing early access to a target address in block-based processor instruction set architecture (BB-ISA). The described techniques and tools for solutions can potentially improve processor performance and can be implemented separately, or in various combinations with each other. As will be described more fully below, the described techniques and tools can be implemented in a digital signal processor, microprocessor, application-specific integrated circuit (ASIC), a soft processor (*e.g.,* a microprocessor core implemented in a field programmable gate array (FPGA) using reconfigurable logic), programmable logic, or other suitable logic circuitry. As will be readily apparent to one of ordinary skill in the art, the disclosed technology can be implemented in various computing platforms, including, but not limited to, servers, mainframes, cellphones, smartphones, PDAs, handheld devices, handheld computers, touch screen tablet devices, tablet computers, wearable computers, and laptop computers.

In some examples of the disclosed technology, a block-based computing system can include a plurality of processor cores and control logic. The processor cores can include a first processor core configured to execute instructions of a first instruction block and to generate a target address of a second instruction block before the first instruction block is committed. The control logic can be configured to receive the target address of the second instruction block and to initiate execution of the second instruction block before the first instruction block is committed. The initiated execution of the second instruction block can be based, at least in part, on exit type information encoded in a header of the first instruction block

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. The foregoing and other objects, features, and advantages of the disclosed subject matter will become more apparent from the following detailed description, which proceeds with reference to the accompanying figures.

### BRIEF DESCRIPTION OF THE DRAWINGS

FIG. 1 illustrates a block-based processor including multiple processor cores, as can be used in some examples of the disclosed technology.
FIG. 2 illustrates a block-based processor core, as can be used in some examples of the disclosed technology.
FIG. 3 illustrates a number of instruction blocks, according to certain examples of disclosed technology.
FIG. 4 illustrates portions of source code and respective instruction blocks.
FIG. 5 illustrates block-based processor headers and instructions, as can be used in some examples of the disclosed technology.
FIG. 6 is a flowchart illustrating an example method for a compiler targeting a block-based computer architecture.
FIG. 7 illustrates various aspects of an example instruction block, as can be used in some examples of the disclosed technology.
FIG. 8 is a flowchart illustrating an example of method for controlling execution of instructions on a block-based computer architecture.
FIGS. 9-10 illustrate examples of different configurations and operations of block-based architectures, as can be used in some examples of the disclosed technology.
FIG. 11 is a block diagram illustrating a suitable computing environment for implementing some embodiments of the disclosed technology.

### DETAILED DESCRIPTION

### I. General Considerations

This disclosure is set forth in the context of representative embodiments that are not intended to be limiting in any way.

As used in this application the singular forms "a," "an," and "the" include the plural forms unless the context clearly dictates otherwise. Additionally, the term "includes" means "comprises." Further, the term "coupled" encompasses mechanical, electrical, magnetic, optical, as well as other practical ways of coupling or linking items together, and does not exclude the presence of intermediate elements between the coupled items. Furthermore, as used herein, the term "and/or" means any one item or combination of items in the phrase.

The systems, methods, and apparatus described herein should not be construed as being limiting in any way. Instead, this disclosure is directed toward all novel and non-obvious features and aspects of the various disclosed embodiments, alone and in various combinations and subcombinations with one another. The disclosed systems, methods, and apparatus are not limited to any specific aspect or feature or combinations thereof, nor do the disclosed things and methods require that any one or more specific advantages be present or problems be solved. Furthermore, any features or aspects of the disclosed embodiments can be used in various combinations and subcombinations with one another.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed things and methods can be used in conjunction with other things and methods. Additionally, the description sometimes uses terms like "produce," "generate," "display," "receive," "emit," "verify," "execute," and "initiate" to describe the disclosed methods. These terms are high-level descriptions of the actual operations that are performed. The actual operations that correspond to these terms will vary depending on the particular implementation and are readily discernible by one of ordinary skill in the art.

Theories of operation, scientific principles, or other theoretical descriptions presented herein in reference to the apparatus or methods of this disclosure have been provided for the purposes of better understanding and are not intended to be limiting in scope. The apparatus and methods in the appended claims are not limited to those apparatus and methods that function in the manner described by such theories of operation.

Any of the disclosed methods can be implemented as computer-executable instructions stored on one or more computer-readable media (*e.g.*, computer-readable media, such as one or more optical media discs, volatile memory components (such as DRAM or SRAM), or nonvolatile memory components (such as hard drives)) and executed on a computer (*e.g.*, any commercially available computer, including smart phones or other mobile devices that include computing hardware). Any of the computer-executable instructions for implementing the disclosed techniques, as well as any data created and used during implementation of the disclosed embodiments, can be stored on one or more computer-readable media (*e.g.*, computer-readable storage media). The computer-executable instructions can be part of, for example, a dedicated software application or a software application that is accessed or downloaded via a web browser or other software application (such as a remote computing application). Such software can be executed, for example, on a single local computer (*e.g.*, as an agent executing on any suitable commercially available computer) or in a network environment (*e.g.*, via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, Java, or any other suitable programming language. Likewise, the disclosed technology is not limited to any particular computer or type of hardware. Certain details of suitable computers and hardware are well-known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

### II. Introduction to the Disclosed Technologies

Superscalar out-of-order microarchitectures employ substantial circuit resources to rename registers, schedule instructions in dataflow order, clean up after miss-speculation, and retire results in-order for precise exceptions. This includes expensive energy-consuming circuits, such as deep, many-ported register files, many-ported content-accessible memories (CAMs) for dataflow instruction scheduling wakeup, and many-wide bus multiplexers and bypass networks, all of which are resource intensive. For example, FPGA-based implementations of multi-read, multi-write RAMs typically require a mix of replication, multi-cycle operation, clock doubling, bank interleaving, live-value tables, and other expensive techniques.

The disclosed technologies can realize energy efficiency and/or performance enhancement through application of techniques including high instruction-level parallelism (ILP), out-of-order (OoO), superscalar execution, while avoiding substantial complexity and overhead in both processor hardware and associated software. In some examples of the disclosed technology, a block-based processor comprising multiple processor cores uses an Explicit Data Graph Execution (EDGE) ISA designed for area-and energy-efficient, high-ILP execution. In some examples, use of EDGE architectures and associated compilers finesses away much of the register renaming, CAMs, and complexity. In some examples, the respective cores of the block-based processor can store or cache fetched and decoded instructions that may be repeatedly executed, and the fetched and decoded instructions can be reused to potentially achieve reduced power and/or increased performance.

In certain examples of the disclosed technology, an EDGE ISA can potentially eliminate the need for one or more complex architectural features, including register renaming, dataflow analysis, misspeculation recovery, and in-order retirement while supporting mainstream programming languages such as C and C++. In certain examples of the disclosed technology, a block-based processor executes a plurality of two or more instructions as an atomic block. Block-based instructions can be used to express semantics of program data flow and/or instruction flow in a more explicit fashion, allowing for improved compiler and processor performance. In certain examples of the disclosed technology, an EDGE ISA includes information about program control flow that can be used to improve detection of improper control flow instructions, thereby increasing performance, saving memory resources, and/or and saving energy.

In some examples of the disclosed technology, instructions organized within instruction blocks are fetched, executed, and committed atomically. Instructions inside blocks execute in dataflow order, which reduces or eliminates using register renaming and provides power-efficient OoO execution. A compiler can be used to explicitly encode data dependencies through the ISA, reducing or eliminating burdening processor core control logic from rediscovering dependencies at runtime. Using predicated execution, intra-block branches can be converted to dataflow instructions, and dependencies, other than memory dependencies, can be limited to direct data dependencies. Disclosed target form encoding techniques allow instructions within a block to communicate their operands directly via operand buffers, reducing accesses to a power-hungry, multi-ported physical register files. In some examples, instructions of a later instruction block can be executed non-speculatively before instructions of an earlier instruction block are committed.

Between instruction blocks, instructions can communicate using memory and registers. Thus, by utilizing a hybrid dataflow execution model, EDGE architectures can still support imperative programming languages and sequential memory semantics, but desirably also enjoy the benefits of out-of-order execution with near in-order power efficiency and complexity.

As will be readily understood to one of ordinary skill in the relevant art, a spectrum of implementations of the disclosed technology are possible with various area, performance, and power tradeoffs.

### III. Example Block-Based Processor

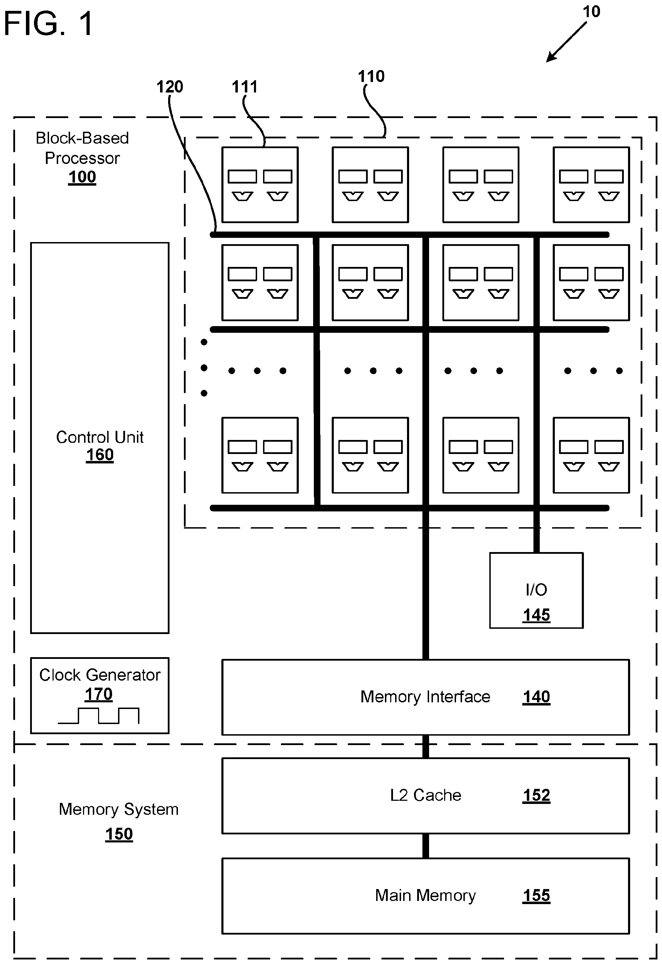

FIG. 1 is a block diagram 10 of a block-based processor 100 as can be implemented in some examples of the disclosed technology. The processor 100 is configured to execute atomic blocks of instructions according to an instruction set architecture (ISA), which describes a number of aspects of processor operation, including a register model, a number of defined operations performed by block-based instructions, a memory model, interrupts, and other architectural features. The block-based processor includes a plurality of processing cores 110, including a processor core 111.

As shown in FIG. 1, the processor cores are connected to each other via core interconnect 120. The core interconnect 120 carries data and control signals between individual ones of the cores 110, a memory interface 140, and an input/output (I/O) interface 145. The core interconnect 120 can transmit and receive signals using electrical, optical, magnetic, or other suitable communication technology and can provide communication connections arranged according to a number of different topologies, depending on a particular desired configuration. For example, the core interconnect 120 can have a crossbar, a bus, a point-to-point bus, or other suitable topology. In some examples, any one of the cores 110 can be connected to any of the other cores, while in other examples, some cores are only connected to a subset of the other cores. For example, each core may only be connected to a nearest 4, 8, or 20 neighboring cores. The core interconnect 120 can be used to transmit input/output data to and from the cores, as well as transmit control signals and other information signals to and from the cores. For example, each of the cores 110 can receive and transmit semaphores that indicate the execution status of instructions currently being executed by each of the respective cores. In some examples, the core interconnect 120 is implemented as wires connecting the cores 110, and memory system, while in other examples, the core interconnect can include circuitry for multiplexing data signals on the interconnect wire(s), switch and/or routing components, including active signal drivers and repeaters, or other suitable circuitry. In some examples of the disclosed technology, signals transmitted within and to/from the processor 100 are not limited to full swing electrical digital signals, but the processor can be configured to include differential signals, pulsed signals, or other suitable signals for transmitting data and control signals.

In the example of FIG. 1, the memory interface 140 of the processor includes interface logic that is used to connect to additional memory, for example, memory located on another integrated circuit besides the processor 100. As shown in FIG. 1 an external memory system 150 includes an L2 cache 152 and main memory 155. In some examples the L2 cache can be implemented using static RAM (SRAM) and the main memory 155 can be implemented using dynamic RAM (DRAM). In some examples the memory system 150 is included on the same integrated circuit as the other components of the processor 100. In some examples, the memory interface 140 includes a direct memory access (DMA) controller allowing transfer of blocks of data in memory without using register file(s) and/or the processor 100. In some examples, the memory interface manages allocation of virtual memory, expanding the available main memory 155.

The I/O interface 145 includes circuitry for receiving and sending input and output signals to other components, such as hardware interrupts, system control signals, peripheral interfaces, co-processor control and/or data signals (e.g., signals for a graphics processing unit, floating point coprocessor, physics processing unit, digital signal processor, or other co-processing components), clock signals, semaphores, or other suitable I/O signals. The I/O signals may be synchronous or asynchronous. In some examples, all or a portion of the I/O interface is implemented using memory-mapped I/O techniques in conjunction with the memory interface 140.

The block-based processor 100 can also include a control unit 160. The control unit 160 supervises operation of the processor 100. Operations that can be performed by the control unit 160 can include allocation and de-allocation of cores for performing instruction processing, control of input data and output data between any of the cores, register files, the memory interface 140, and/or the I/O interface 145, modification of execution flow, and verifying target location(s) of branch instructions, instruction headers, and other changes in control flow. The control unit 160 can also process hardware interrupts, and control reading and writing of special system registers, for example the program counter stored in one or more register file(s). In some examples of the disclosed technology, the control unit 160 is at least partially implemented using one or more of the processing cores 110, while in other examples, the control unit 160 is implemented using a non-block-based processing core (*e.g.,* a general-purpose RISC processing core coupled to memory). In some examples, the control unit 160 is implemented at least in part using one or more of: hardwired finite state machines, programmable microcode, programmable gate arrays, or other suitable control circuits. In alternative examples, control unit functionality can be performed by one or more of the cores 110.

The control unit 160 includes a scheduler that is used to allocate instruction blocks to the processor cores 110. As used herein, scheduler allocation refers to directing operation of an instruction blocks, including initiating instruction block mapping, fetching, decoding, execution, committing, aborting, idling, and refreshing an instruction block. Processor cores 110 are assigned to instruction blocks during instruction block mapping. The recited stages of instruction operation are for illustrative purposes, and in some examples of the disclosed technology, certain operations can be combined, omitted, separated into multiple operations, or additional operations added.

The block-based processor 100 also includes a clock generator 170, which distributes one or more clock signals to various components within the processor (e.g., the cores 110, interconnect 120, memory interface 140, and I/O interface 145). In some examples of the disclosed technology, all of the components share a common clock, while in other examples different components use a different clock, for example, a clock signal having differing clock frequencies. In some examples, a portion of the clock is gated to allowing power savings when some of the processor components are not in use. In some examples, the clock signals are generated using a phase-locked loop (PLL) to generate a signal of fixed, constant frequency and duty cycle. Circuitry that receives the clock signals can be triggered on a single edge (*e.g.,* a rising edge) while in other examples, at least some of the receiving circuitry is triggered by rising and falling clock edges. In some examples, the clock signal can be transmitted optically or wirelessly.

### IV. Example Block-Based Processor Core

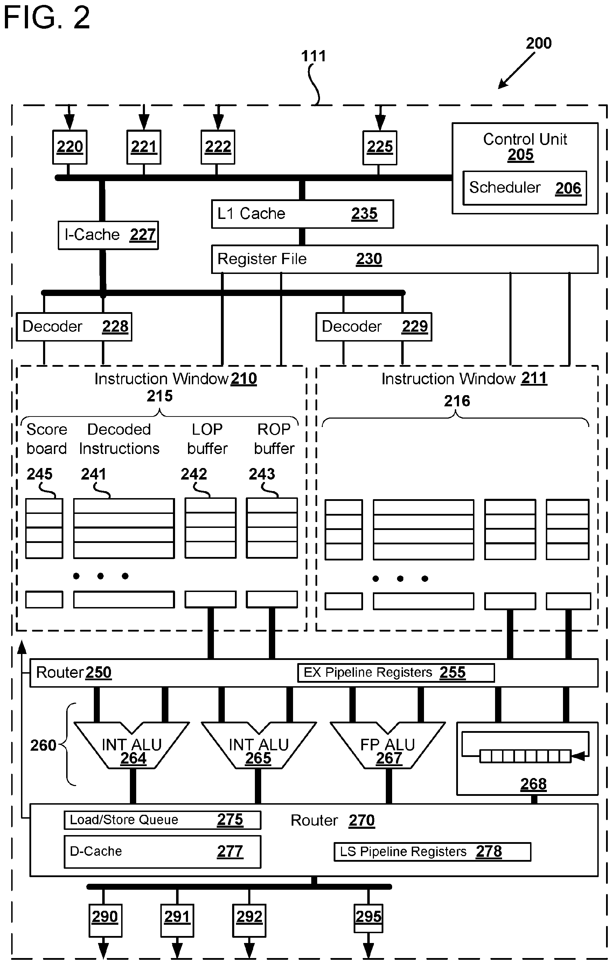

FIG. 2 is a block diagram 200 further detailing an example microarchitecture for the block-based processor 100, and in particular, an instance of one of the block-based processor cores, as can be used in certain examples of the disclosed technology. For ease of explanation, the exemplary block-based processor core is illustrated with five stages: instruction fetch (IF), decode (DC), operand fetch, execute (EX), and memory/data access (LS). However, it will be readily understood by one of ordinary skill in the relevant art that modifications to the illustrated microarchitecture, such as adding/removing stages, adding/removing units that perform operations, and other implementation details can be modified to suit a particular application for a block-based processor.

As shown in FIG. 2, the processor core 111 includes a control unit 205, which generates control signals to regulate core operation and schedules the flow of instructions within the core using an instruction scheduler 206. Operations that can be performed by the control unit 205 and/or instruction scheduler 206 can include allocation and de-allocation of cores for performing instruction processing, control of input data and output data between any of the cores, register files, the memory interface 140, and/or the I/O interface 145. The control unit 205 can also process hardware interrupts, and control reading and writing of special system registers, for example the program counter stored in one or more register file(s). In other examples of the disclosed technology, the control unit 205 and/or instruction scheduler 206 are implemented using a non-block-based processing core (*e.g.,* a general-purpose RISC processing core coupled to memory). In some examples, the control unit 205 and/or instruction scheduler 206 are implemented at least in part using one or more of: hardwired finite state machines, programmable microcode, programmable gate arrays, or other suitable control circuits.

The exemple processor core 111 includes two instruction windows 210 and 211, each of which can be configured to execute an instruction block. In some examples of the disclosed technology, an instruction block is an atomic collection of block-based-processor instructions that includes an instruction block header and a plurality of one or more instructions. As will be discussed further below, the instruction block header includes information that can be used to further define semantics of one or more of the plurality of instructions within the instruction block. Depending on the particular ISA and processor hardware used, the instruction block header can also be used during execution of the instructions, and to improve performance of executing an instruction block by, for example, allowing for early fetching of instructions and/or data, improved branch prediction, speculative execution, improved energy efficiency, and improved code compactness. In other examples, different numbers of instruction windows are possible, such as one, four, eight, or other number of instruction windows.

Each of the instruction windows 210 and 211 can receive instructions and data from one or more of input ports 220, 221, and 222 which connect to an interconnect bus and instruction cache 227, which in turn is connected to the instruction decoders 228 and 229. Additional control signals can also be received on an additional input port 225. Each of the instruction decoders 228 and 229 decodes instruction headers and/or instructions for an instruction block and stores the decoded instructions within a memory store 215 and 216 located in each respective instruction window 210 and 211.

The processor core 111 further includes a register file 230 coupled to an L1 (level one) cache 235. The register file 230 stores data for registers defined in the block-based processor architecture, and can have one or more read ports and one or more write ports. For example, a register file may include two or more write ports for storing data in the register file, as well as having a plurality of read ports for reading data from individual registers within the register file. In some examples, a single instruction window (e.g., instruction window 210) can access only one port of the register file at a time, while in other examples, the instruction window 210 can access one read port and one write port, or can access two or more read ports and/or write ports simultaneously. In some examples, the register file 230 can include 64 registers, each of the registers holding a word of 32 bits of data. (This application will refer to 32-bits of data as a word, unless otherwise specified.) In some examples, some of the registers within the register file 230 may be allocated to special purposes. For example, some of the registers can be dedicated as system registers examples of which include registers storing constant values (*e.g.,* an all zero word), program counter(s) (PC), which indicate the current address of a program thread that is being executed, a physical core number, a logical core number, a core assignment topology, core control flags, a processor topology, or other suitable dedicated purpose. In some examples, there are multiple program counter registers, one or each program counter, to allow for concurrent execution of multiple execution threads across one or more processor cores and/or processors. In some examples, program counters are implemented as designated memory locations instead of as registers in a register file. In some examples, use of the system registers may be restricted by the operating system or other supervisory computer instructions. In some examples, the register file 230 is implemented as an array of flip-flops, while in other examples, the register file can be implemented using latches, SRAM, or other forms of memory storage. The ISA specification for a given processor, for example processor 100, specifies how registers within the register file 230 are defined and used.

In some examples, the processor 100 includes a global register file that is shared by a plurality of the processor cores. In some examples, individual register files associate with a processor core can be combined to form a larger file, statically or dynamically, depending on the processor ISA and configuration.

As shown in FIG. 2, the memory store 215 of the instruction window 210 includes a number of decoded instructions 241, a left operand (LOP) buffer 242, a right operand (ROP) buffer 243, and an instruction scoreboard 245. In some examples of the disclosed technology, each instruction of the instruction block is decomposed into a row of decoded instructions, left and right operands, and scoreboard data, as shown in FIG. 2. The decoded instructions 241 can include partially- or fully-decoded versions of instructions stored as bit-level control signals. The operand buffers 242 and 243 store operands (e.g., register values received from the register file 230, data received from memory, immediate operands coded within an instruction, operands calculated by an earlier-issued instruction, or other operand values) until their respective decoded instructions are ready to execute. Instruction operands are read from the operand buffers 242 and 243, not the register file.

The memory store 216 of the second instruction window 211 stores similar instruction information (decoded instructions, operands, and scoreboard) as the memory store 215, but is not shown in FIG. 2 for the sake of simplicity. Instruction blocks can be executed by the second instruction window 211 concurrently or sequentially with respect to the first instruction window, subject to ISA constraints and as directed by the control unit 205.

In some examples of the disclosed technology, front-end pipeline stages IF and DC can run decoupled from the back-end pipelines stages (IS, EX, LS). In one embodiment, the control unit can fetch and decode two instructions per clock cycle into each of the instruction windows 210 and 211. In alternative embodiments, the control unit can fetch and decode one, four, or another number of instructions per clock cycle into a corresponding number of instruction windows. The control unit 205 provides instruction window dataflow scheduling logic to monitor the ready state of each decoded instruction's inputs (*e.g.*, each respective instruction's predicate(s) and operand(s) using the scoreboard 245. When all of the inputs for a particular decoded instruction are ready, the instruction is ready to issue. The control logic 205 then initiates execution of one or more next instruction(s) (*e.g.*, the lowest numbered ready instruction) each cycle and its decoded instruction and input operands are sent to one or more of functional units 260 for execution. The decoded instruction can also encode a number of ready events. The scheduler in the control logic 205 accepts these and/or events from other sources and updates the ready state of other instructions in the window. Thus execution proceeds, starting with the processor core's 111 ready zero input instructions, instructions that are targeted by the zero input instructions, and so forth.

The decoded instructions 241 need not execute in the same order in which they are arranged within the memory store 215 of the instruction window 210. Rather, the instruction scoreboard 245 is used to track dependencies of the decoded instructions and, when the dependencies have been met, the associated individual decoded instruction is scheduled for execution. For example, a reference to a respective instruction can be pushed onto a ready queue when the dependencies have been met for the respective instruction, and instructions can be scheduled in a first-in first-out (FIFO) order from the ready queue. Information stored in the scoreboard 245 can include, but is not limited to, the associated instruction's execution predicate (such as whether the instruction is waiting for a predicate bit to be calculated and whether the instruction executes if the predicate bit is true or false), availability of operands to the instruction, or other prerequisites required before executing the associated individual instruction.

In one embodiment, the scoreboard 245 can include decoded ready state, which is initialized by the instruction decoder 231, and active ready state, which is initialized by the control unit 205 during execution of the instructions. For example, the decoded ready state can encode whether a respective instruction has been decoded, awaits a predicate and/or some operand(s), perhaps via a broadcast channel, or is immediately ready to issue. The decoded active state can encode whether a respective instruction awaits a predicate and/or some operand(s), is ready to issue, or has already issued. The decoded ready state can cleared on a block reset or a block refresh. Upon branching to a new instruction block, the decoded ready state and the decoded active state is cleared (a block or core reset). However, when an instruction block is re-executed on the core, such as when it branches back to itself (a block refresh), only active ready state is cleared. Block refreshes can occur immediately (when an instruction block branches to itself) or after executing a number of other intervening instruction blocks. The decoded ready state for the instruction block can thus be preserved so that it is not necessary to re-fetch and decode the block's instructions. Hence, block refresh can be used to save time and energy in loops and other repeating program structures.

The number of instructions that are stored in each instruction window generally corresponds to the number of instructions within an instruction block. In some examples, the number of instructions within an instruction block can be 32, 64, 128, 1024, or another number of instructions. In some examples of the disclosed technology, an instruction block is allocated across multiple instruction windows within a processor core. In some examples, the instruction windows 210, 211 can be logically partitioned so that multiple instruction blocks can be executed on a single processor core. For example, one, two, four, or another number of instruction blocks can be executed on one core. The respective instruction blocks can be executed concurrently or sequentially with each other.

Instructions can be allocated and scheduled using the control unit 205 located within the processor core 111. The control unit 205 orchestrates fetching of instructions from memory, decoding of the instructions, execution of instructions once they have been loaded into a respective instruction window, data flow into/out of the processor core 111, and control signals input and output by the processor core. For example, the control unit 250 can include the ready queue, as described above, for use in scheduling instructions. The instructions stored in the memory store 215 and 216 located in each respective instruction window 210 and 211 can be executed atomically. Thus, updates to the visible architectural state (such as the register file 230 and the memory) affected by the executed instructions can be buffered locally within the core 200 until the instructions are committed.

The control unit 205 can determine when instructions are ready to be committed, sequence the commit logic, and issue a commit signal. For example, a commit phase for an instruction block can begin when all register writes are buffered, all writes to memory are buffered, and a branch target is calculated. The instruction block can be committed when updates to the visible architectural state are complete. For example, an instruction block can be committed when the register writes are written to the register file, the stores are sent to a load/store unit or memory controller, a target address of the next instruction block is generated, and the commit signal is generated. The control unit 205 also controls, at least in part, allocation of functional units 260 to each of the respective instructions windows.

The control unit 205 can output the target address pointing to the next instruction block to be executed. The target address can be output either synchronously with or prior to issuing the commit signal. For example, the target address can be communicated outside of the core 200 (such as to the control unit 160 of FIG. 1) prior to issuing the commit signal so that non-speculative execution of instructions of the next instruction block can be initiated before the currently executing instruction block is committed. A valid signal can be associated with the target address to indicate when the target address is valid.

As shown in FIG. 2, a first router 250, which has a number of execution pipeline registers 255, is used to send data from either of the instruction windows 210 and 211 to one or more of the functional units 260, which can include but are not limited to, integer ALUs (arithmetic logic units) (*e.g.,* integer ALUs 264 and 265), floating point units (*e.g.,* floating point ALU 267), shift/rotate logic (*e.g.,* barrel shifter 268), or other suitable execution units, which can including graphics functions, physics functions, and other mathematical operations. Data from the functional units 260 can then be routed through a second router 270 to outputs 290, 291, and 292, routed back to an operand buffer (*e.g.* LOP buffer 242 and/or ROP buffer 243), or fed back to another functional unit, depending on the requirements of the particular instruction being executed. The second router 270 can include a load/store queue 275, which can be used to issue memory instructions, a data cache 277, which stores data being input to or output from the core to memory, and load/store pipeline register 278.

The core also includes control outputs 295 which are used to indicate, for example, when execution of all of the instructions for one or more of the instruction windows 215 or 216 has completed. When execution of an instruction block is complete, the instruction block is designated as "committed" and signals from the control outputs 295 can in turn can be used by other cores within the block-based processor 100 and/or by the control unit 160 to initiate scheduling, fetching, and execution of other instruction blocks. Both the first router 250 and the second router 270 can send data back to the instruction (for example, as operands for other instructions within an instruction block).

As will be readily understood to one of ordinary skill in the relevant art, the components within an individual core 200 are not limited to those shown in FIG. 2, but can be varied according to the requirements of a particular application. For example, a core may have fewer or more instruction windows, a single instruction decoder might be shared by two or more instruction windows, and the number of and type of functional units used can be varied, depending on the particular targeted application for the block-based processor. Other considerations that apply in selecting and allocating resources with an instruction core include performance requirements, energy usage requirements, integrated circuit die, process technology, and/or cost.

It will be readily apparent to one of ordinary skill in the relevant art that trade-offs can be made in processor performance by the design and allocation of resources within the instruction window (*e.g.*, instruction window 210) and control logic 205 of the processor cores 110. The area, clock period, capabilities, and limitations substantially determine the realized performance of the individual cores 110 and the throughput of the block-based processor 110.

The instruction scheduler 206 can have diverse functionality. In certain higher performance examples, the instruction scheduler is highly concurrent. For example, each cycle, the decoder(s) write instructions' decoded ready state and decoded instructions into one or more instruction windows, selects the next instruction to issue, and, in response the back end sends ready events-either target-ready events targeting a specific instruction's input slot (predicate, left operand, right operand, *etc.*), or broadcast-ready events targeting all instructions. The per-instruction ready state bits, together with the decoded ready state can be used to determine that the instruction is ready to issue.

In some examples, the instruction scheduler 206 is implemented using a storage (e.g., first-in first-out (FIFO) queues, content addressable memories (CAMs)) storing data indicating information used to schedule execution of instruction blocks according to the disclosed technology. For example, data regarding instruction dependencies, transfers of control, speculation, branch prediction, and/or data loads and stores are arranged in storage to facilitate determinations in mapping instruction blocks to processor cores. For example, instruction block dependencies can be associated with a tag that is stored in a FIFO or CAM and later accessed by selection logic used to map instruction blocks to one or more processor cores. In some examples, the instruction scheduler 206 is implemented using a general purpose processor coupled to memory, the memory being configured to store data for scheduling instruction blocks. In some examples, instruction scheduler 206 is implemented using a special purpose processor or using a block-based processor core coupled to the memory. In some examples, the instruction scheduler 206 is implemented as a finite state machine coupled to the memory. In some examples, an operating system executing on a processor (e.g., a general purpose processor or a block-based processor core) generates priorities, predictions, and other data that can be used at least in part to schedule instruction blocks with the instruction scheduler 206. As will be readily apparent to one of ordinary skill in the relevant art, other circuit structures, implemented in an integrated circuit, programmable logic, or other suitable logic can be used to implement hardware for the instruction scheduler 206.

In some cases, the scheduler 206 accepts events for target instructions that have not yet been decoded and must also inhibit reissue of issued ready instructions. The scheduler 206 can update and track the ready state of a respective instruction via the scoreboard 245. In some examples, instructions can be non-predicated, or predicated (based on a true or false condition). A predicated instruction does not become ready until it is targeted by another instruction's predicate result, and that result matches the predicate condition. If the associated predicate does not match, the instruction never issues. In some examples, predicated instructions may be issued and executed speculatively. In some examples, a processor may subsequently check that speculatively issued and executed instructions were correctly speculated. In some examples, a misspeculated issued instruction and the specific transitive closure of instructions in the block that consume its outputs may be re-executed, or misspeculated side effects annulled. In some examples discovery of a misspeculated instruction leads to the complete roll back and re-execution of an entire block of instructions.

### V. Example Stream of Instruction Blocks

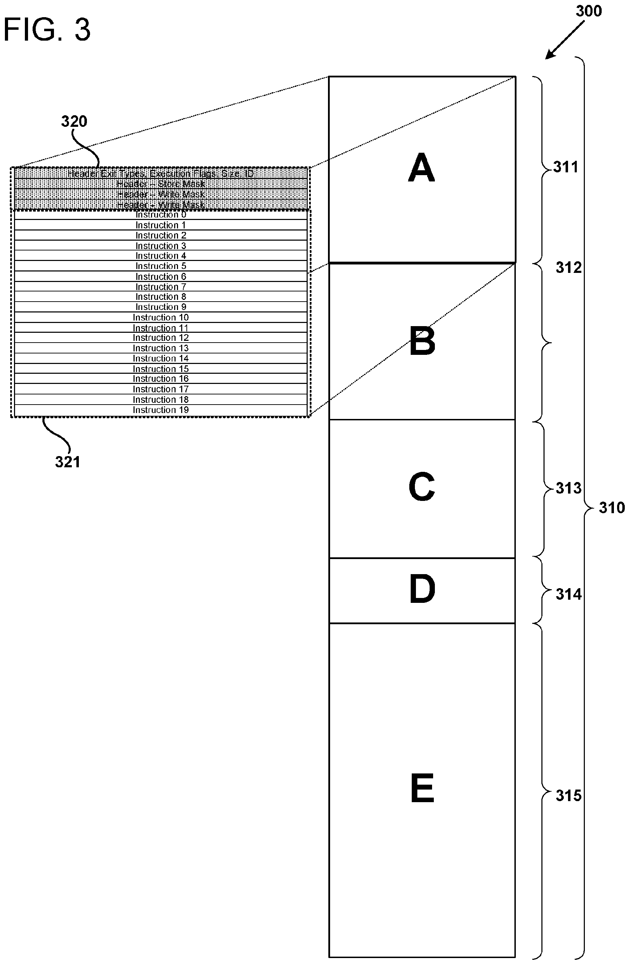

Turning now to the diagram 300 of FIG. 3, a portion 310 of a stream of block-based instructions, including a number of variable length instruction blocks 311-315 (A-E) is illustrated. The stream of instructions can be used to implement user application, system services, or any other suitable use. In the example shown in FIG. 3, each instruction block begins with an instruction header, which is followed by a varying number of instructions. For example, the instruction block 311 includes a header 320 and twenty instructions 321. The particular instruction header 320 illustrated includes a number of data fields that control, in part, execution of the instructions within the instruction block, and also allow for improved performance enhancement techniques including, for example branch prediction, speculative execution, lazy evaluation, and/or other techniques. The instruction header 320 also includes an ID bit which indicates that the header is an instruction header and not an instruction. The instruction header 320 also includes an indication of the instruction block size. The instruction block size can be in larger chunks of instructions than one, for example, the number of 4-instruction chunks contained within the instruction block. In other words, the size of the block is shifted 4 bits in order to compress header space allocated to specifying instruction block size. Thus, a size value of 0 indicates a minimally-sized instruction block which is a block header followed by four instructions. In some examples, the instruction block size is expressed as a number of bytes, as a number of words, as a number of n-word chunks, as an address, as an address offset, or using other suitable expressions for describing the size of instruction blocks. In some examples, the instruction block size is indicated by a terminating bit pattern in the instruction block header and/or footer.

The instruction block header 320 can also include execution flags, which indicate special instruction execution requirements. For example, branch prediction or memory dependence prediction can be inhibited for certain instruction blocks, depending on the particular application.

In some examples of the disclosed technology, the instruction header 320 includes one or more identification bits that indicate that the encoded data is an instruction header. For example, in some block-based processor ISAs, a single ID bit in the least significant bit space is always set to the binary value 1 to indicate the beginning of a valid instruction block. In other examples, different bit encodings can be used for the identification bit(s). In some examples, the instruction header 320 includes information indicating a particular version of the ISA for which the associated instruction block is encoded.

The block instruction header can also include a number of block exit types for use in, for example, branch prediction, control flow determination, and/or bad jump detection. The exit type can indicate what the type of branch instructions are, for example: sequential branch instructions, which point to the next contiguous instruction block in memory; offset instructions, which are branches to another instruction block at a memory address calculated relative to an offset; subroutine calls, or subroutine returns. By encoding the branch exit types in the instruction header, the branch predictor can begin operation, at least partially, before branch instructions within the same instruction block have been fetched and/or decoded.

The instruction block header 320 also includes a store mask which identifies the load-store queue identifiers that are assigned to store operations. The instruction block header can also include a write mask, which identifies which global register(s) the associated instruction block will write. The associated register file must receive a write to each entry before the instruction block can complete. In some examples a block-based processor architecture can include not only scalar instructions, but also single-instruction multiple-data (SIMD) instructions, that allow for operations with a larger number of data operands within a single instruction.

### VI. Example Block Instruction Target Encoding

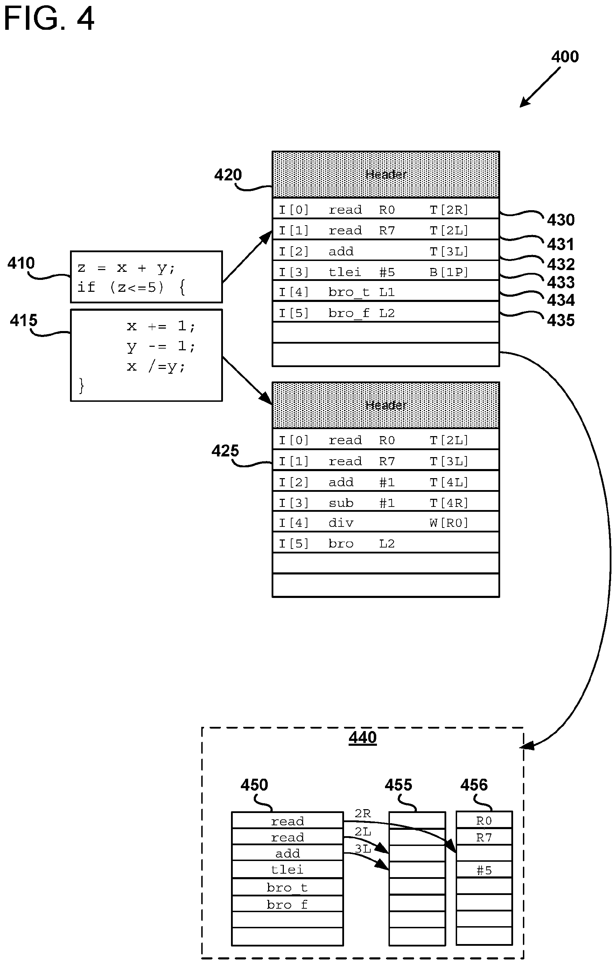

FIG. 4 is a diagram 400 depicting an example of two portions 410 and 415 of C language source code and their respective instruction blocks 420 and 425 (in assembly language), illustrating how block-based instructions can explicitly encode their targets. The high-level C language source code can be translated to the low-level assembly language and machine code by a compiler whose target is a block-based processor. A high-level language can abstract out many of the details of the underlying computer architecture so that a programmer can focus on functionality of the program. In contrast, the machine code encodes the program according to the target computer's ISA so that it can be executed on the target computer, using the computer's hardware resources. Assembly language is a human-readable form of machine code.

In this example, the first two READ instructions 430 and 431 target the right (T[2R]) and left (T[2L]) operands, respectively, of the ADD instruction 432. In the illustrated ISA, the read instruction is the only instruction that reads from the global register file (*e.g.,* register file 160); however any instruction can target the global register file. When the ADD instruction 432 receives the result of both register reads it will become ready and execute.

When the TLEI (test-less-than-equal-immediate) instruction 433 receives its single input operand from the ADD, it will become ready and execute. The test then produces a predicate operand that is broadcast on channel one (B[1P]) to all instructions listening on the broadcast channel, which in this example are the two predicated branch instructions (BRO_T (branch if true) 434 and BRO_F (branch if false) 435). The branch that receives a matching predicate value will fire.

A dependence graph 440 for the instruction block 420 is also illustrated, as an array 450 of instruction nodes and their corresponding operand targets 455 and 456. This illustrates the correspondence between the block instructions 420, the corresponding instruction window entries, and the underlying dataflow graph represented by the instructions. Here decoded instructions READ 430 and READ 431 are ready to issue as they have no input dependencies. As they issue and execute, the values read from registers R6 and R7 are written into the right and left operand buffers of ADD 432, marking the left and right operands of ADD 432 "ready." As a result, the ADD 432 instruction becomes ready, issues to an ALU, executes, and the sum is written to the left operand of TLEI 433.

As a comparison, a conventional out-of-order RISC or CISC processor would dynamically build the dependence graph at runtime, using additional hardware complexity, power, area and reducing clock frequency and performance. However, the dependence graph is known statically at compile time and an EDGE compiler can directly encode the producer-consumer relations between the instructions through the ISA, freeing the microarchitecture from rediscovering them dynamically. This can potentially enable a simpler microarchitecture, reducing area, power and boosting frequency and performance.

### VII. Example Block-Based Instruction Formats

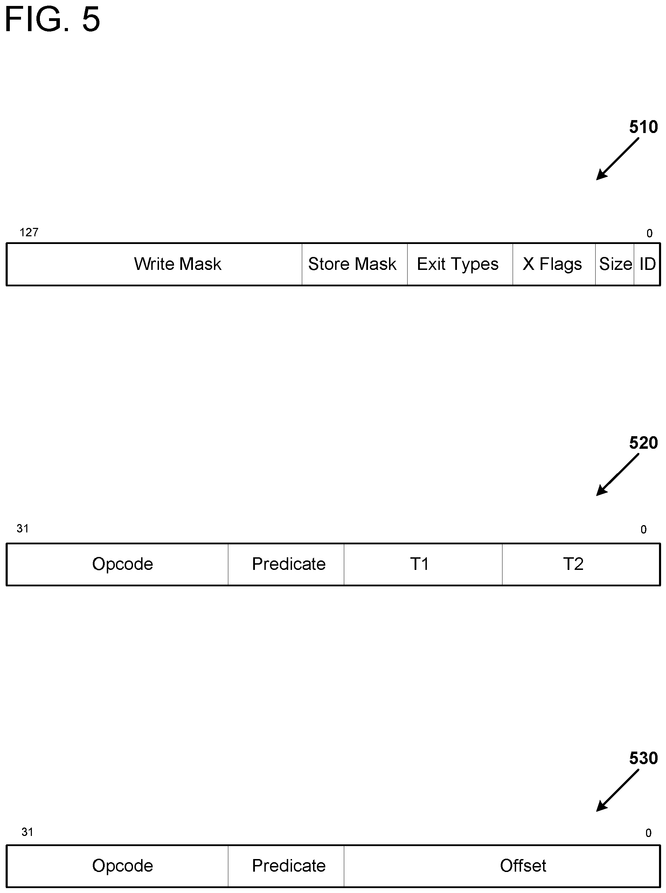

FIG. 5 is a diagram illustrating generalized examples of instruction formats for an instruction header 510, a generic instruction 520, and a branch instruction 530. Each of the instruction headers or instructions is labeled according to the number of bits. For example, the instruction header 510 includes four 32-bit words and is labeled from its least significant bit (lsb) (bit 0) up to its most significant bit (msb) (bit 127). As shown, the instruction header includes a write mask field, a store mask field, a number of exit type fields, a number of execution flag fields, an instruction block size field, and an instruction header ID bit (the least significant bit of the instruction header).

A compiler can encode one or more branch exit types using the exit type fields of the instruction header 510. The branch exit type can be used with signals generated by a processor core executing the instruction block to calculate the address of the next instruction block. For example, the processor core can generate a branch identifier and a target address as soon as it is known that a branch will be taken. The target address can be generated before the instruction block is committed so that the next instruction block can be initiated before the earlier instruction block commits. In one embodiment, eighteen bits can be reserved for the exit type fields, so that between one and six different 3-bit exit types can be encoded in the header. At run-time, the processor core executing the instruction block can indicate which of the six exit type fields to use via the branch identifier signal. The exit type field corresponding to the branch identifier and the target address from the core can be used to calculate the address of the next instruction block.

In this embodiment, there are six branch exit types that can be encoded in the 3-bit fields, where the branch exit types are: null, sequential, offset, indirect, call, and return. A branch exit type of null can indicate that there is no branch associated with this field. Six possible branches can be encoded for a given instruction block, but some instruction blocks may have fewer than six branches. For example, a particular instruction block may have only one branch target, so only the first branch exit type field will be non-null and the other five fields will be null. As another example, a particular instruction block may have two branch targets and the first branch exit type field can correspond to a first predicate result, the second branch exit type field can correspond to a second predicate result, and the other four fields will be null.

A branch exit type of sequential can indicate that a target address of the next instruction block associated with this branch is the address of the instruction block that directly follows the current instruction block. For example, if a sequential stream of instructions exceeds the maximum number of instructions within an instruction window, the sequential stream of instructions will be broken up into multiple instruction blocks that can be stored contiguously in memory. The branch exit type for each of the instruction blocks (other than the ending instruction block) will be the sequential exit type so that, during execution, the instructions of the different instruction blocks can execute sequentially. As another example, an instruction block may potentially take one of multiple branches having different respective target addresses. If one of the branches is to the next sequential instruction block, then the branch exit type associated with that branch can be encoded as the sequential type.

A branch exit type of offset can indicate that the target address of the next instruction block associated with the branch is offset from the currently executing instruction block. The offset can be known at compile time, such as when the branch is due to an iterative or looping construct, or the offset can be dependent on calculations or input received during execution of the instruction block. During execution of the instruction block, the target address generated by the processor core for the associated branch will be interpreted as an offset to be added to the address of the instruction block executing on the processor core. Alternatively, the offset can be added to the address of the instruction block that sequentially follows the instruction block executing on the processor core.

A branch exit type of indirect can indicate that the target address of the next instruction block associated with the branch is determined by instructions within the instruction block. For example, the address may come from memory via a load instruction, or be computed within the instruction block. The memory address storing the target address can be known at compile time or can be dependent on calculations or input received during execution of the instruction block. During execution of the instruction block, the target address generated by the processor core for the associated branch will be interpreted as the memory address storing the target address of the next instruction block.

A branch exit type of call can indicate that the target address of the next instruction block associated with the branch is the address of a subroutine. The address of the subroutine can be known at compile time or can be generated at run-time, such as when the address is dependent on calculations or input received during execution of the instruction block. During execution of the instruction block, the target address generated by the processor core for the associated branch will be interpreted as the memory address of the beginning of the subroutine. This address can be saved by the control logic, such as a branch predictor. In particular, the branch predictor can include one or more link registers or a stack for storing return address(s) of subroutines. The branch predictor can use the link register values or the top of the stack to predict the target address for an instruction block which has a return exit type.

A branch exit type of return can indicate that the target address of the next instruction block associated with the branch is the return address of a subroutine that is being executed on the processor core. The return address of the subroutine is generated at run-time when the subroutine is called. In one embodiment, the return address can be maintained only by the control logic, and the target address generated by the processor core during execution can be ignored. In an alternative embodiment, the instruction block(s) of the subroutine can maintain the return address, and the target address generated by the processor core for the associated branch will be interpreted as the return address from the subroutine. The target address generated by the instruction block running on the processor core can be compared to the address stored in the link register.

It should be understood that other branch exit types and branch information are possible and can be encoded with more or fewer bits within the respective headers of the instruction blocks. For example, the branch information can include a pre-determined target address, such as when the compiler is able to generate the target address from a static analysis of the program. As another example, the branch exit type can be loop, begin-loop, or end-loop to indicate blocks that may be executed multiple times, where the loop type can indicate that the block can loop back to itself (a single-block loop), the begin-loop type can indicate the beginning block of a multi-block loop, and the end-loop type can indicate the ending block of a multi-block loop. The branch information can include whether a loop executes a fixed number of times and how many times the loop executes, for example.

The compiler can encode execution flags using the "X Flags" fields of the instruction header 510. The X flags can be used for encoding any special execution requirements for the instruction block. The requirements can specify any special hardware resources used within the instruction block (such as when the cores have different modes or when different types of cores are available on the block-based processor), compiler hints or commands to the control logic of the block-based processor, and/or debug functionality. In one embodiment, the flags can include bits for indicating: use a core configured in a vector mode; inhibit a branch predictor; inhibit a memory dependence predictor; block synchronization required; break after block; and break before block. It should be understood that other execution flags are possible and can be encoded within the headers of the respective instruction blocks.

The illustrated generic block instruction 520 is stored as one 32-bit word and includes an opcode field, a predicate field, a broadcast ID field (BID), a first target field (T1), and a second target field (T2). For instructions with more consumers than target fields, a compiler can build a fanout tree using move instructions, or it can assign high-fanout instructions to broadcasts. Broadcasts support sending an operand over a lightweight network to any number of consumer instructions in a core. A broadcast identifier can be encoded in the generic block instruction 520.

While the generic instruction format outlined by the generic instruction 520 can represent some or all instructions processed by a block-based processor, it will be readily understood by one of skill in the art that, even for a particular example of an ISA, one or more of the instruction fields may deviate from the generic format for particular instructions. The opcode field specifies the operation(s) performed by the instruction 520, such as memory read/write, register load/store, add, subtract, multiply, divide, shift, rotate, system operations, or other suitable instructions. The predicate field specifies the condition under which the instruction will execute. For example, the predicate field can specify the value "true," and the instruction will only execute if a corresponding condition flag matches the specified predicate value. In some examples, the predicate field specifies, at least in part, which is used to compare the predicate, while in other examples, the execution is predicated on a flag set by a previous instruction (e.g., the preceding instruction in the instruction block). In some examples, the predicate field can specify that the instruction will always, or never, be executed. Thus, use of the predicate field can allow for denser object code, improved energy efficiency, and improved processor performance, by reducing the number of branch instructions.

The target fields T1 and T2 specifying the instructions to which the results of the block-based instruction are sent. For example, an ADD instruction at instruction slot 5 can specify that its computed result will be sent to instructions at slots 3 and 10. Depending on the particular instruction and ISA, one or both of the illustrated target fields can be replaced by other information, for example, the first target field T1 can be replaced by an immediate operand, an additional opcode, specify two targets, *etc.*

The branch instruction 530 includes an opcode field, a predicate field, a broadcast ID field (BID), and an offset field. The opcode and predicate fields are similar in format and function as described regarding the generic instruction. The offset can be expressed in four instruction blocks in some examples, thus extending the memory address range over which a branch can be executed. The predicate shown with the generic instruction 520 and the branch instruction 530 can be used so that instructions within an instruction block form a directed acyclic graph (DAG). For example, execution of a particular instruction can be predicated on the result of a previous instruction (*e.g.*, a comparison of two operands). If the predicate is false, the instruction will not commit values calculated by the particular instruction. If the predicate value does not match the required predicate, the instruction does not issue. For example, a BRO F (predicated false) instruction will issue if it is sent a false predicate value.

It should be readily understood that, as used herein, the term "branch instruction" is not limited to changing program execution to a relative memory location, but also includes jumps to an absolute or symbolic memory location, subroutine calls and returns, and other instructions that can modify the execution flow. In some examples, the execution flow is modified by changing the value of a system register (*e.g.,* a program counter PC or instruction pointer), while in other examples, the execution flow can be changed by modifying a value stored at a designated location in memory. In some examples, a jump register branch instruction is used to jump to a memory location stored in a register. In some examples, subroutine calls and returns are implemented using jump and link and jump register instructions, respectively.

### VIII. Example Compiler Method

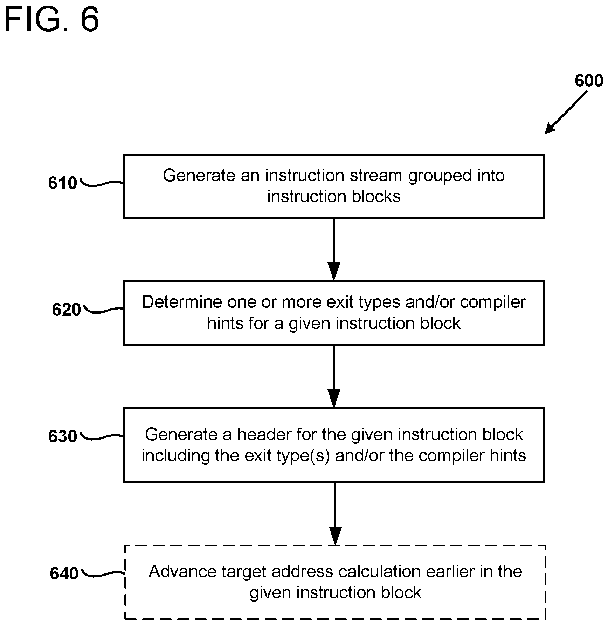

FIG. 6 is a flowchart illustrating an example method 600 for compiling to a block-based computer architecture. At 610, the compiler can generate an instruction stream grouped into instruction blocks. The compiler can translate high-level source code (such as C, C++, or Java) to low-level machine code that is executable on the targeted block-based processor. The machine code can be generated as a sequential stream of instructions which can be grouped according to the computer's hardware resources and the control flow of the code. For example, the generated machine code can include a plurality of basic blocks. A basic block can be a block of code where control can only enter the block at the first instruction of the block and control can only leave the block at the last instruction of the basic block. Thus, a basic block is a sequence of instructions that are executed together. A given instruction block can be a single basic block, a portion of a basic block, or multiple basic blocks, so long as the instruction block can be executed within the constraints of the ISA and the hardware resources of the targeted computer.

Constraints on the size and content of the instruction blocks can include a maximum size of an instruction window of a processor core, a maximum number of register accesses, a maximum number of load/store accesses, and a maximum number of branches, for example. The number of instructions in an instruction block cannot exceed the number of instructions that can be executed within an instruction window of a processor core. Thus, the maximum number of instructions can be 128, 64, or 32 instructions depending on the size of the instruction window of the target processor. Some basic blocks may be smaller than the instruction window. In order to use the core more efficiently, small basic blocks may be combined with one or more other basic blocks by converting branches between the combined basic blocks into dataflow instructions. In particular, a branch from a first basic block to a second basic block (the basic block to be merged) can be converted into an instruction for calculating a predicate, and the instructions of the second basic block can be predicated upon the result of the predicate calculation. Alternatively, some basic blocks may be larger than the instruction window and so these basic blocks can be partitioned into multiple instruction blocks, so that no instruction block is larger than the maximum instruction window size. Basic blocks may also be partitioned into multiple instruction blocks if the basic block exceeds the number of register or load/store accesses for a given instruction window.

At 620, one or more exit types and/or compiler hints for a given instruction block can be determined. For example, branch exit types for each potential branch and branch information, such as a pre-determined target address, and an iteration count can be determined. As described above with reference to FIG. 5, examples of exit types can be null, sequential, offset, indirect, call, and return, depending on the control flow out of the instruction block. A single branch or multiple branches can be possible out of a given instruction block (such as when multiple basic blocks are combined into the given instruction block), but only one of the branches will be taken during execution of the instruction block. Each of the potential branches can have a different exit type. Each of the potential branches can be assigned an identifier and the exit type corresponding to the branch can be encoded in the field that corresponds to the identifier. For example, the exit type for branch 0 can be encoded in field 0 and the exit type for branch 1 can be encoded in field 1.

At 630, a header for the given instruction block can be generated. The header can include the exit types and any compiler hints for the given instruction block. The instruction header 510 in FIG. 5 is one example of an instruction header. The headers can be of fixed size, as shown by instruction header 510, or the headers can be variable sizes. For example, if the target address of the instruction block can be statically calculated, the header can be expanded to include the pre-determined target address. The size of the header can be encoded in one or more bits of the first word of the header, for example.

At 640, a target address calculation can be advanced to earlier in the given instruction block. By advancing the target address calculation, the next instruction block can be fetched and executed sooner than if the target address calculation is not advanced. Thus, the current instruction block can potentially be executed in parallel with the next instruction block, and performance of the block-based processor can be potentially increased. This contrasts with a conventional ISA, where generally, the last instruction executed within a basic block will be a branch to the target address of the next basic block (or back to the beginning of the same basic block in the case of a loop). Some ISAs may expose a branch delay slot or slots so that the branch instruction will precede the last instruction by as many delay slots as can be filled. However, use of branch delay slots is limited because the number of branch delay slots must be less than the number of pipeline stages of the processor, and is typically one and sometimes two. Thus, in a conventional ISA, the control flow cannot be diverted from the executing basic block until the end or very near the end of the basic block because the fetch and decode logic acts as a serialization point.

However, a block-based processor including multiple processor cores and/or instruction windows can potentially enable the target address calculation of a given instruction block to be decoupled from the end of the block and hoisted or advanced to an earlier time of execution. For example, after the target address is calculated, the given instruction block can continue executing using its assigned resources of a processor core while the next instruction block beginning at the target address is initiated on different resources of the same or a different processor core. Thus, because the instruction stream is grouped into atomically executed instruction blocks and parallel resources are provided for executing those instruction blocks, the target address calculation of the block-based processor can be advanced to earlier in the given instruction block than is possible using branch delay slots, potentially allowing more work to be performed in parallel. For example, in a block-based architecture, the target address calculation can be advanced to the first instruction of the instruction block if calculating the target address is not dependent on other instructions of the instruction block.

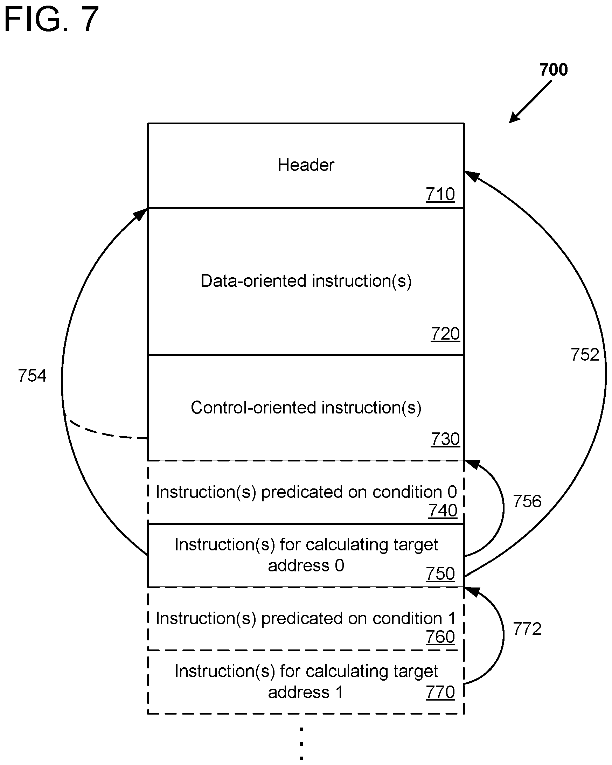

FIG. 7 illustrates various aspects of an instruction block 700 and shows examples of how a compiler can advance the target address calculation to earlier in the instruction block 700. The instruction block 700 can include a header 710, data-oriented instructions 720, and control-oriented instructions 730. The data-oriented instructions 720 can include instructions for calculating data, receiving input data, and/or generating output data. For example, the data-oriented instructions 720 can be used to: perform mathematical or logical operations on data; read data from an input device, a register, or memory; and/or write data to an output device, register, or memory. The control-oriented instructions 730 can include instructions for determining the control flow of a program, such as which instruction blocks are executed and in what order. For ease of illustration, the data-oriented instructions 720 and the control-oriented instructions 730 are illustrated as separate blocks of instructions within the instruction block 700. However, it should be understood that data-oriented and control-oriented instructions can be intermixed within the instruction block 700. Furthermore, some instructions may have characteristics of both the data-oriented instructions 720 and the control-oriented instructions 730. For example, some control flow decisions are dependent on data values after a calculation or after the data is input.

A compiler can emit instructions of the program in an order relative to each other. In some cases, the relative execution order between instructions must be maintained for proper program operation. For example, some instructions produce results that are consumed by other instructions. The consuming instruction is data-dependent on the producing instruction because the consuming instruction uses a result of the producing instruction. Thus, the producing instruction must be executed before the consuming instruction. As another example, some instructions determine or control whether other instructions are executed. The controlled instruction is control-dependent on the controlling instruction because the result of the controlling instruction determines whether the controlled instruction is executed. Alternatively, some instructions can be independent of each other when the execution of these instructions have no effect on each other. Independent instructions can be executed in multiple different orders with no change in functionality.

The instruction block 700 can include instruction(s) 750 for calculating a target address 0, and the compiler can advance the instruction(s) 750 to earlier in the instruction block 700. A target address can be used to determine a beginning address of the next instruction block to execute. Each instruction block can include one or more exit points, where the respective exit points can point to different target addresses.

As a specific example, an instruction block can be a portion of a basic block, such as when the basic block has more instructions than the instruction window. When the instruction block 700 is a portion of a basic block, there is only one exit point because the next instruction block to execute will be the next instruction block in the sequence of instruction blocks. The target address can be calculated at compile time as the address of the next sequential instruction block. Thus, the target address can be identified within the header 710 using an exit type of sequential. In other words, calculation of the target address can be advanced (as shown by arc 752) to the header 710 so that the target address can be calculated when the header 710 is decoded and before the other instructions of the instruction block are executed. By advancing the target address calculation to the header, the next instruction block can be non-speculatively fetched as soon as the header is decoded.

When the instruction block 700 is a single basic block, there can be one or more target addresses out of the instruction block 700. For example, the instruction block 700 can have a single target address when the basic block ends on an unconditional branch, such as a subroutine call. If the target address is known at compile time, then branching information can be advanced to the header 710 as shown by arc 752. If however, the target address calculation is dependent upon instructions executed within the instruction block 700, such as the control-oriented instructions 730, the target address calculation and the instructions upon which it depends can be advanced ahead of all of the data-oriented instructions 720, as shown by arc 754. Alternatively, the target address calculation and the instructions upon which it depends can be advanced ahead of some of the data-oriented instructions 720. For example, some or all memory load instructions of the current instruction block 700 can be prioritized ahead of calculating the target address so that memory accesses of the current block are performed before instructions are fetched for the next instruction block.

The instruction block 700 can include multiple instructions (e.g., 750, 770) for calculating multiple respective potential target addresses, and the compiler can advance one or more of the instructions 750, 770 to earlier in the instruction block 700. For example, a conditional branch can cause the program to flow to one target address if a condition is true and to a different target address if the condition is false. For example, the source code can specify:

```
               if (condition 0) {
                      perform instructions predicated on condition 0; call sub-routine 0}
               else {
                      perform instructions predicated on condition 1; call sub-routine 1},
```

where condition 1 is the inverse of condition 0. In a block-based architecture, the condition or predicate can be evaluated in one instruction, such as in the control-oriented instructions 730. The control-dependent instructions can be predicated on the outcome of the evaluation. As a specific example, a test instruction, in the control-oriented instructions 730, can test for condition 0. After condition 0 is evaluated and if condition 0 is true, instruction(s) 740 predicated on condition 0 and the instruction(s) 750 for calculating the target address 0 can be executed. If condition 0 is not true (e.g., condition 1 is true), instruction(s) 760 predicated on condition 1 and the instruction(s) 770 for calculating the target address 1 can be executed. As shown by arc 756, the compiler can advance the instruction(s) 750 for calculating the target address 0 to earlier than some or all of the instruction(s) 740 predicated on condition 0. In particular, the compiler can advance the instruction(s) 750 and the instructions upon which it depends ahead of all of the predicated instructions 740 that are independent of the instruction(s) 750. Similarly, as shown by arc 772, the compiler can advance the instruction(s) 770 for calculating the target address 1 to earlier than some or all of the instruction(s) 760 predicated on condition 1.

After compilation, the instructions can be stored in a computer-readable memory so that the instructions can be retrieved by a block-based processor to execute a program. The following examples describe execution on the block-based processor.

### IX. Examples of Providing Early Access to a Target Address

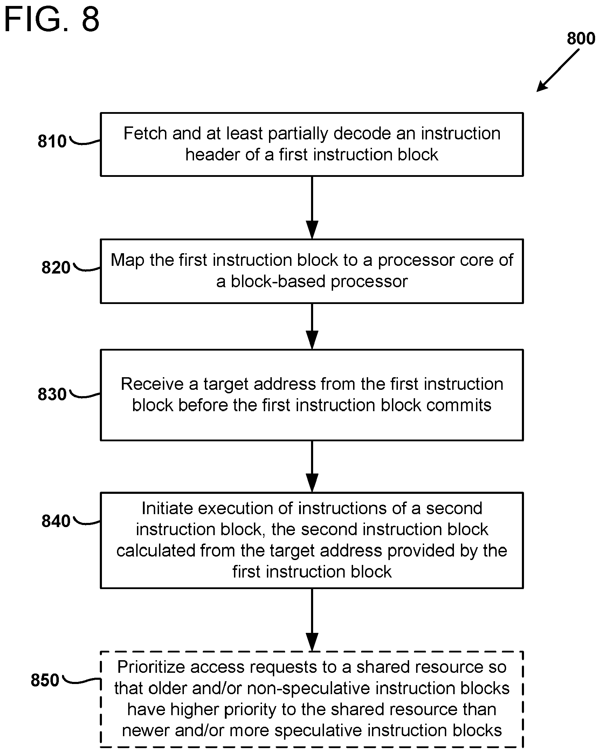

FIG. 8 is a flowchart illustrating an example of method 800 for controlling execution of instructions on a block-based computer architecture. For example, the method 800 can be used by control logic of a block-based processor. The control logic can be implemented in a controller external to the block-based processor, within application specific hardware (such as a special-purpose control unit or distributed logic gates) of the block-based processor, or executed as code within one or more processor cores of the block-based processor, for example. The method 800 can be used to provide the control logic with early access to a target address of the next instruction block so that multiple instruction blocks can non-speculatively execute in parallel.

At 810, an instruction header of a first instruction block is fetched and at least partially decoded. For example, the first instruction block can be fetched from a memory system which may include an instruction cache, a unified instruction/data level 1 (L1) cache, a level 2 (L2) cache, and/or main memory (such as on-chip memory and/or external memory). The instruction header can include the size of the instruction block and one or more exit types, where each exit type corresponds to a potential branch from the instruction block. The first instruction block is fetched from memory beginning at the beginning address of the first instruction block. The size of the first instruction block can be added to the beginning address of the first instruction block to calculate the beginning address of the next sequential instruction block. The size of the first instruction block can be compared to a list of available resources to determine where the first instruction block can be mapped.

At 820, the first instruction block can be mapped to a processor core of the block-based processor. A mapped instruction block is a block that is currently assigned to execute on a given processor core. A block-based processor includes a finite number of homogeneous or heterogeneous processor cores. A typical program can include more instruction blocks than can fit onto the processor cores. Thus, the respective instruction blocks of a program will generally share the processor cores with the other instruction blocks of the program. In other words, a given core may execute the instructions of several different instruction blocks during the execution of a program. Having a finite number of processor cores also means that execution of the program may stall or be delayed when all of the processor cores are busy executing instruction blocks and no new cores are available for dispatch. When a processor core becomes available, an instance of an instruction block can be mapped to the processor core.

The control logic can include an instruction block scheduler for assigning which instruction block will execute on which processor core and when the instruction block will be executed. The mapping can be based on a variety of factors, such as a target energy to be used for the execution, the number and configuration of the processor cores, the current and/or former usage of the processor cores, the dynamic flow of the program, whether speculative execution is enabled, a confidence level that a speculative block will be executed, and other factors. An instance of an instruction block can be mapped to a processor core that is currently available (such as when no instruction block is currently executing on it). In one embodiment, the instance of the instruction block can be mapped to a processor core that is currently busy (such as when the core is executing a different instance of an instruction block) and the later-mapped instance can begin when the earlier-mapped instance is complete. As another example, the instance of the instruction block can be mapped to a free instruction window within a processor core.

When the instruction block is mapped to a specific processor core, the instruction block is in-flight. An in-flight instruction block is a block that is targeted to a particular core of the block-based processor, and the block will be or is executing, either speculatively or non-speculatively, on the particular processor core. A block executes non-speculatively when it is known during mapping of the block that the program will use the work provided by the executing instruction block. A block executes speculatively when it is not known during mapping whether the program will or will not use the work provided by the executing instruction block. Executing a block speculatively can potentially increase performance, such as when the speculative block is started earlier than if the block were to be started after or when it is known that the work of the block will be used. However, executing speculatively can potentially increase the energy used when executing the program, such as when the speculative work is not used by the program.

After the instruction block is mapped to the specific processor core, the instruction block can be fetched, decoded, and executed by the specific processor core. Fetching can include loading the instructions of the instruction block from memory and into a buffer or registers of the specific processor core. Fetching can overlap with decoding and execution when the processor core is pipelined. When instructions of the instruction block are loaded onto the processor core, the instruction block is resident on the processor core. The instruction block is partially resident when some, but not all, instructions of the instruction block are loaded. The instruction block is fully resident when all instructions of the instruction block are loaded. The instruction block will be resident on the processor core until the processor core is reset or a different instruction block is fetched onto the processor core. Decoding can include transforming the fetched instructions from relatively compact machine code, to a less compact representation that can be used to control hardware resources of the processor core. The decoded instructions are stored within an instruction window of the processor core and can be executed when the operands of the instructions are ready and when resources of the core are available to execute the instructions. Generally, the instructions executing on the core only update local state of the core until the core enters a commit phase where architectural state outside of the core will be updated. However, instructions generating the target address of the next instruction block can communicate with the control logic before the instruction block is committed. In particular, the target address of the next instruction block and a branch identifier can be communicated to the control logic before the instruction block is committed. For example, when the target address of the block is determined by a branch with offset or a call with offset instruction, the target address may be determined when the instruction block is decoded.

At 830, the target address (and the branch identifier) from the first instruction block can be received by the control logic before the first instruction block commits. The received target address will be interpreted according to the exit type corresponding to the branch identifier so that the beginning address of a second instruction block can be calculated. For example, the target address can be interpreted as an offset or a subroutine address depending on the exit type corresponding to the received branch identifier. The second instruction block is the next instruction block in program order and so it is a non-speculative instruction block.

At 840, execution of the instructions of the second instruction block can be initiated. Initiating execution of the second instruction block can include: prefetching the second instruction block into a L1 cache of the block-based architecture; prefetching a header of the second instruction block; decoding the header of the second instruction block; mapping the second instruction block to a processor core; fetching the second instruction block into an instruction window of a second core of the block-based architecture; fetching the second instruction block into an instruction window of the first core of the block-based architecture; refreshing the second instruction block loaded on the second core; decoding one or more instructions of the second instruction block; and/or decoding and/or executing one or more instructions of the second instruction block. Because an instruction block only follows one exit point per iteration of the instruction block, fetch and execution of a next instruction block can begin once the predicates for the taken exit point have been determined, even if other instructions within the instruction block are executing. For example, predicated and/or non-predicated register and/or memory writes can continue to be made even after definitively taking the branch to the next instruction block.

Instruction blocks can be repeatedly executed, such as when the instruction block is mapped to execute a sub-routine or a body of a loop. The second instruction block can already be resident in a core of the block-based processor and so refreshing the core can save the time and energy that would be used to re-fetch and re-decode the second instruction block. As used herein, an instruction block refresh or a processor core refresh means enabling the processor core to re-execute one or more instruction blocks that are resident on the processor core. In one embodiment, refreshing a core can include resetting the active-ready state for one or more instruction blocks. Thus, when a block is refreshed, the decoded instructions and the decoded ready state can be maintained while the active ready state is cleared. It may be desirable to re-execute the instruction block on the same processor core when the instruction block is part of a loop or a repeated sub-routine or when a speculative block was terminated and is to be re-executed. The decision to refresh can be made by the processor core itself (contiguous reuse) or by outside of the processor core (non-contiguous reuse), such as by the control logic performing instruction block scheduling.

At 850, access requests to a shared resource can be prioritized so that older and/or non-speculative instruction blocks have higher priority to the shared resource than newer and/or more speculative instruction blocks. As one example, the control logic can track the oldest executing instruction block and always give priority to it when it requests to access the shared resource. The oldest executing instruction block is non-speculative whereas newer executing instruction blocks can be non-speculative or speculative. The newer executing instruction blocks can be given priority to the shared resource using a round-robin, random, or other algorithm. As another example, the control logic can generate a time-stamp for each instruction block and always give priority to the oldest instruction block requesting access to the shared resource. By prioritizing older and/or non-speculative instruction blocks over newer and/or more speculative instruction blocks, the older instruction blocks can complete faster so that data-dependencies can be resolved earlier and so that resources can be freed up for new instruction blocks to use. Furthermore, there is a higher likelihood that the accesses to the shared resource will be used and not wasted on an aborted speculative instruction. Shared resources can include a cache, a register file, a memory subsystem, an input port, an output port, a special-purpose core or accelerator, and/or other various resources, for example.

The following is one example of how the method 800 may be used. Instruction block 1 can be fetched and the header can be at least partially decoded (810). For example, the header can indicate how large instruction block 1 is so that it can be mapped to a processor core with enough storage capacity for the instruction block. Instruction block 1 can be mapped to a first processor core (820). Instruction block 1 may include a branch with offset instruction to instruction block 2. When instruction block 1 is first fetched onto the first processor core, the offset of the branch is not yet known. However, the target address of instruction block 1 can be determined before instruction block 1 commits (830), such as when instructions are being decoded or during execution of the instructions. As a specific example, the branch instruction can be the only branch of instruction block 1. If the branch instruction is not predicated then the target address will be known during decode of the branch instruction. If the branch instruction is predicated on a value that is calculated within the instruction block then the potential target address can be known after decode, and the actual target address will be known after calculating the predicate. However, rather than waiting to calculate the predicate, a branch predictor may predict the branch as taken and can initiate speculative execution of instruction block 2, using the potential target address, before the predicate is calculated. Thus, instruction block 2 can run ahead either in another instruction window in the present core, or in a second core. If the branch predictor predicts correctly, then instruction block 2 can continue to run and may be committed after instruction block 1 is committed. If the branch predictor predicts incorrectly, then instruction block 2 can be aborted without committing it.

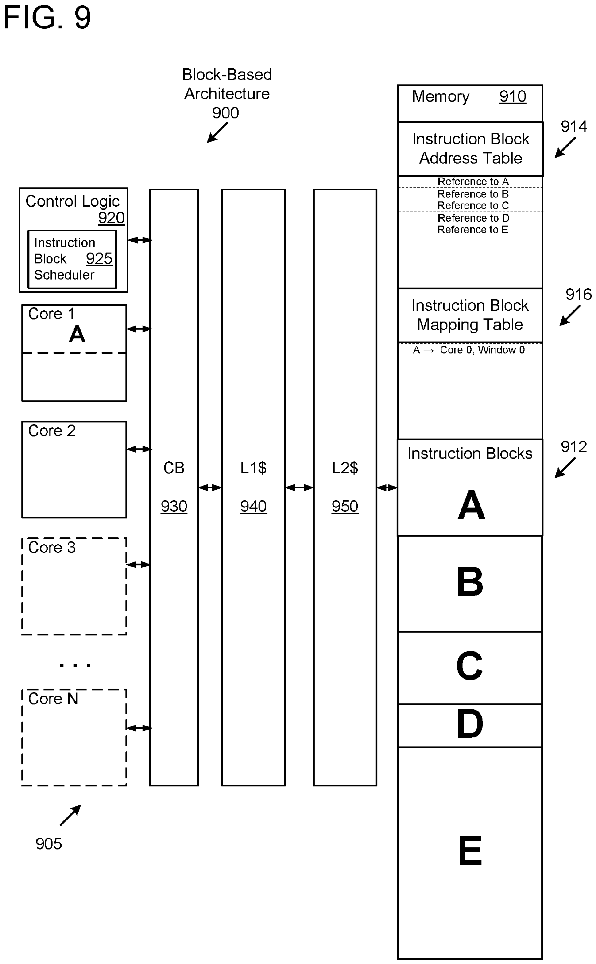

FIGS. 9-10 illustrate examples of different configurations and operations of block-based architectures. The examples illustrate various aspects associated with providing early access to a target address. FIG. 9 shows a block-based architecture 900 including a plurality of processing cores 905, control logic 920, and a memory system. The memory system is a shared resource of the block-based architecture because multiple cores of the cores 905 may attempt to access the memory system. The memory system can include a cross-bar 930, a level 1 cache (L1$) 940, a level 2 cache (L2$) 950, and main memory 910. The cross-bar 930 can be used to route data between the cores and the L1 cache 940. Different implementations of the cross-bar 930 and L1 cache 940 can enable more or fewer concurrent accesses to the L1 cache 940. In one embodiment, the cross-bar 930 can enable multiple cores to access the L1 cache 940 concurrently when the memory accesses are to different banks of the L1 cache 940. For example, the L1 cache can have a bank associated with each core. In an alternative embodiment, the cross-bar 930 can only enable a single core to access the L1 cache 940 at a given time.

In some embodiments, the control logic 920 can be implemented at least in part using one or more of: hardwired finite state machines, programmable microcode, programmable gate arrays, or other suitable control circuits. In one embodiment, the control logic 920 can be one of the processor cores 905 running an instruction block that performs control functions of the block-based architecture 900, such as instruction block scheduling. In another embodiment, an external processor executing software code can be used to communicate with and perform control functions of the block-based architecture 900.

Instructions 912 of a program can be grouped into instruction blocks (A-E) and stored in main memory 910. An instruction block address table 914 can store the beginning addresses of the instruction blocks. The instruction blocks can be copied into the L1 cache 940 and the L2 cache 950 so that the cores 905 and the control logic 920 have faster access to the blocks.

The program can begin to execute when an instruction block scheduler 925 of the control logic 920 maps and initiates loading of the first instruction block (A) of the program to core 1, where the instruction block A can begin execution. The instruction block scheduler 925 can track the residency of the cores by maintaining an instruction block mapping table 916 that stores information about which instruction block is mapped to which core. The instruction block mapping table 916 can be stored in memory 910 (as illustrated) or within another memory structure (such as a cache of the control logic 920) that is not accessible by software. The instruction block scheduler 925 can fetch and decode the instruction headers of the instruction blocks. The header information can be used to determine the size of the instruction block and information about how to calculate the address of the next instruction block (e.g., one or more exit type fields).

During the execution of block A on core 1, and before the block A is committed, a target address corresponding to the next instruction block can be generated by block A and communicated to the control logic 920. The address of next instruction block can be calculated based on the received target address and the exit type fields of block A's header. When the address of next instruction block is calculated, the control logic 920 can initiate execution of the next instruction block. For example, the next instruction block of the program can be block B and the control logic 920 can initiate execution of instruction block B.

Initiating execution of block B can include: prefetching block B into the L1 cache 930; fetching the header of block B; decoding the header of block B; mapping block B to one of the cores 905; fetching block B into one of the cores 905 (such as core 2, or an unused window of core 1); refreshing block B (if it was already resident on one of the cores 905); decoding one or more instructions of block B; and/or decoding and/or executing one or more instructions of block B. For example, block B can be mapped and loaded onto core 2 where it can begin to execute concurrently with block A. Thus, blocks A and B can execute in parallel because block A provided early access to the address of block B. By executing the blocks in parallel, the program can be completed faster than if the blocks were sequentially executed.

The control logic 920 can include a branch predictor (not shown) that can be used to initiate speculative execution of the blocks of the program. For example, the branch predictor can initiate execution of instruction block C, by mapping block C to core 3 so that core 3 can begin to fetch the instructions of block C from memory 910.

Each of the blocks loaded on the different cores 905 may request access to shared resources, such as the memory system. For example, blocks A and B may request data from the memory concurrently with an instruction fetch of block C. The control logic 920 can be configured to prioritize access to the shared resource so that older non-speculative instruction blocks have priority to the resource over newer non-speculative instruction blocks and speculative instruction blocks. In this example, blocks A and B are executing non-speculatively and block C is executing speculatively. Block A is the oldest block, block B is newer than block A since block B was initiated by block A, and block C is the newest block. Block A can have priority over blocks B and C since block A is the oldest non-speculative block; block B can have priority over block C since block B is older than block C and also because block B is non-speculative while block C is speculative.

Program execution can continue in this manner until the program is complete. The control logic 920 can be configured so that either one program or multiple programs can run on the block-based architecture 900. For example, the control logic 920 can partition the cores 905 so that each process or thread can be allocated to a subset of the cores 905.

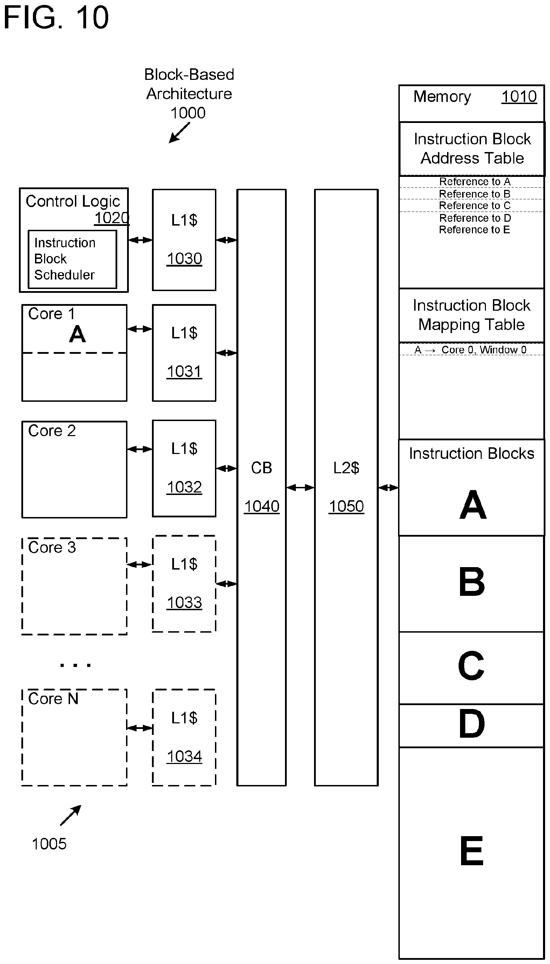

FIG. 10 illustrates that a block-based architecture 1000 can use a memory system that is organized differently than the memory system of FIG. 9. In particular, FIG. 10 shows a block-based architecture 1000 including a plurality of processing cores 1005, control logic 1020, and a memory system. The memory system can include private level 1 caches (L1$) 1030-1034 for each respective core, a cross-bar 1040, a level 2 cache (L2$) 1050, and main memory 1010. Here, the cross-bar 1040 can be used to route data between the private L1 caches 1030-1034 and the L2 cache 1030. Different implementations of the cross-bar 1040 and L2 cache 1050 can enable more or fewer concurrent accesses to the L2 cache 1050. In one embodiment, the cross-bar 1040 can enable multiple L1 caches to access the L2 cache 1050 concurrently when the memory accesses are to different banks of the L2 cache 1050. For example, the L2 cache can have a bank associated with each L1 cache. In an alternative embodiment, the cross-bar 1040 can only enable a single L1 cache to access the L2 cache 1050 at a given time.

It should be understood that the memory systems of FIGS. 9 and 10 illustrate only two of many possible memory systems that can be used with a block-based architecture. Variations can include different numbers or levels of caches, different cache organizations (such as providing separate instruction and data caches), different connectivity between the levels, and other memory architectures known in the art.

### X. Example Computing Environment

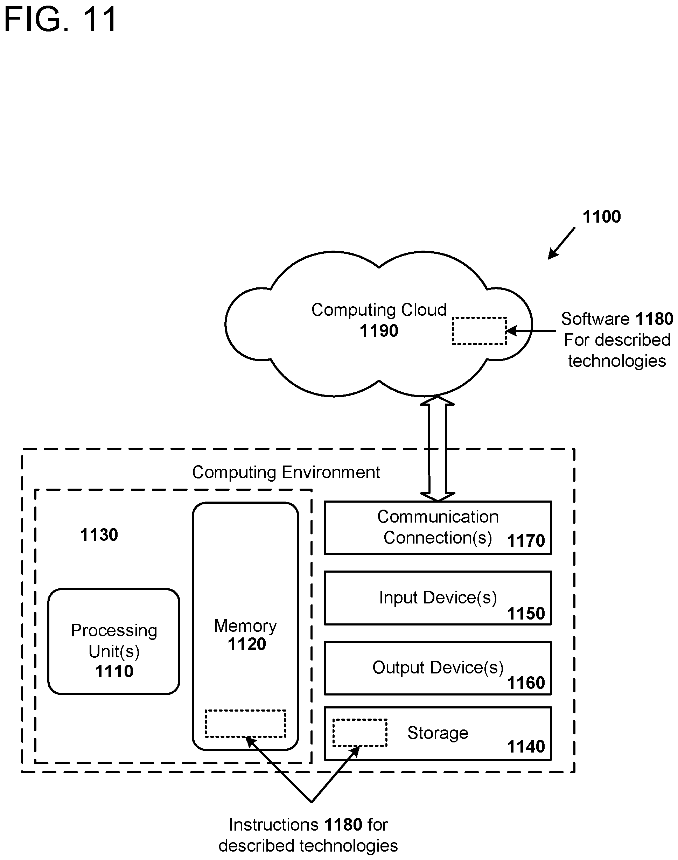

FIG. 11 illustrates a generalized example of a suitable computing environment 1100 in which described embodiments, techniques, and technologies, including bad jump detection in a block-based processor, can be implemented. For example, the computing environment 1100 can implement disclosed techniques for verifying branch instruction target locations, as described herein.

The computing environment 1100 is not intended to suggest any limitation as to scope of use or functionality of the technology, as the technology may be implemented in diverse general-purpose or special-purpose computing environments. For example, the disclosed technology may be implemented with other computer system configurations, including hand held devices, multi-processor systems, programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules (including executable instructions for block-based instruction blocks) may be located in both local and remote memory storage devices.

With reference to FIG. 11, the computing environment 1100 includes at least one block-based processing unit 1110 and memory 1120. In FIG. 11, this most basic configuration 1130 is included within a dashed line. The block-based processing unit 1110 executes computer-executable instructions and may be a real or a virtual processor. In a multi-processing system, multiple processing units execute computer-executable instructions to increase processing power and as such, multiple processors can be running simultaneously. The memory 1120 may be volatile memory (*e.g.*, registers, cache, RAM), non-volatile memory (*e.g.,* ROM, EEPROM, flash memory, *etc.*), or some combination of the two. The memory 1120 stores software 1180, images, and video that can, for example, implement the technologies described herein. A computing environment may have additional features. For example, the computing environment 1100 includes storage 1140, one or more input devices 1150, one or more output devices 1160, and one or more communication connections 1170. An interconnection mechanism (not shown) such as a bus, a controller, or a network, interconnects the components of the computing environment 1100. Typically, operating system software (not shown) provides an operating environment for other software executing in the computing environment 1100, and coordinates activities of the components of the computing environment 1100.

The storage 1140 may be removable or non-removable, and includes magnetic disks, magnetic tapes or cassettes, CD-ROMs, CD-RWs, DVDs, or any other medium which can be used to store information and that can be accessed within the computing environment 1100. The storage 1140 stores instructions for the software 1180, plugin data, and messages, which can be used to implement technologies described herein.

The input device(s) 1150 may be a touch input device, such as a keyboard, keypad, mouse, touch screen display, pen, or trackball, a voice input device, a scanning device, or another device, that provides input to the computing environment 1100. For audio, the input device(s) 1150 may be a sound card or similar device that accepts audio input in analog or digital form, or a CD-ROM reader that provides audio samples to the computing environment 1100. The output device(s) 1160 may be a display, printer, speaker, CD-writer, or another device that provides output from the computing environment 1100.

The communication connection(s) 1170 enable communication over a communication medium (*e.g.*, a connecting network) to another computing entity. The communication medium conveys information such as computer-executable instructions, compressed graphics information, video, or other data in a modulated data signal. The communication connection(s) 1170 are not limited to wired connections (*e.g.*, megabit or gigabit Ethernet, Infiniband, Fibre Channel over electrical or fiber optic connections) but also include wireless technologies (*e.g.*, RF connections via Bluetooth, WiFi (IEEE 802.11a/b/n), WiMax, cellular, satellite, laser, infrared) and other suitable communication connections for providing a network connection for the disclosed agents, bridges, and agent data consumers. In a virtual host environment, the communication(s) connections can be a virtualized network connection provided by the virtual host.

Some embodiments of the disclosed methods can be performed using computer-executable instructions implementing all or a portion of the disclosed technology in a computing cloud 1190. For example, disclosed compilers and/or block-based-processor servers are located in the computing environment 1130, or the disclosed compilers can be executed on servers located in the computing cloud 1190. In some examples, the disclosed compilers execute on traditional central processing units (*e.g.,* RISC or CISC processors).

Computer-readable media are any available media that can be accessed within a computing environment 1100. By way of example, and not limitation, with the computing environment 1100, computer-readable media include memory 1120 and/or storage 1140. As should be readily understood, the term computer-readable storage media includes the media for data storage such as memory 1120 and storage 1140, and not transmission media such as modulated data signals.

### X. Additional Examples of the Disclosed Technology

Additional examples of the disclosed subject matter are discussed herein in accordance with the examples discussed above.

In one embodiment, a block-based computing system comprises a plurality of processor cores and control logic. The plurality of processor cores comprises a first processor core configured to execute instructions of a first instruction block and to generate a target address of a second instruction block before the first instruction block is committed. The control logic is configured to receive the target address of the second instruction block and to initiate non-speculative execution of the second instruction block, before the first instruction block is committed. The block-based computing system may further comprise a resource shared by the plurality of processor cores. The control logic may be further configured to prioritize access to the shared resource so that older non-speculative instruction blocks have priority to the resource over newer non-speculative instruction blocks and speculative instruction blocks. The resource shared by the plurality of processor cores may be a cache, a register file, or memory, for example. The initiating non-speculative execution of the second instruction block may be based at least in part on exit type information encoded in a header of the first instruction block. Respective processor cores of the plurality of processor cores may comprise a private instruction cache. The initiating execution of the second instruction block may comprise loading the second instruction block into a second core of the plurality of processor cores. The first instruction block may be loaded in a first instruction window of the first core. The initiating execution of the second instruction block may comprise loading the second instruction block into a second instruction window of the first core.

In one embodiment, a method of performing a branch in a block-based architecture comprises executing one or more instructions of a first instruction block using a first core of the block-based architecture; and before the first instruction block is committed, initiating non-speculative execution of instructions of a second instruction block. The method may further comprise evaluating predicates for the instructions of the first instruction block, and based at least in part on the predicate evaluation, performing the initiating. The method may further comprise evaluating exit type information stored in an instruction header of the first instruction block; and based at least in part on the exit type information, performing the initiating. The initiated, non-speculative execution may comprise prefetching the second instruction block into a L1 cache of the block-based architecture. The initiated, non-speculative execution may comprise fetching the second instruction block into an instruction window of a second core of the block-based architecture. The initiated, non-speculative execution comprises fetching the second instruction block into an instruction window of the first core of the block-based architecture. The second instruction block may be loaded on a second core of the block-based architecture before the initiating, and the initiated, non-speculative execution may comprise refreshing the second instruction block loaded on the second core. The initiated, non-speculative execution may comprise prefetching a header of the second instruction block. The initiated, non-speculative execution may comprises prefetching a header of the second instruction block. The method may further comprise prioritizing access requests to a shared resource of the block-based architecture so that older non-speculative instruction blocks have priority to the shared resource over newer non-speculative instruction blocks and speculative instruction blocks. The shared resource may be a cache, a register file, or a memory subsystem, for example.

In one embodiment, a computer-readable storage device or memory has instructions thereon for causing a processor to execute a method for compiling source code into machine code that is executable on a block-based computer architecture. The instructions comprise instructions to cause the processor to generate a stream of machine code instructions executable on the block-based computer architecture, the stream of machine code instructions divided into a plurality of instruction blocks. The instructions comprise instructions to cause the processor to determine an exit type for a respective instruction block of the plurality of instruction blocks. The instructions comprise instructions to cause the processor to encode the exit type for a respective instruction block in a header of the respective instruction block. The instructions may further comprise instructions to cause the processor to advance instructions for calculating a branch target address within respective instruction blocks. The exit type may comprise at least one or more of the following types: null, sequential, offset, indirect, call, or return.

In view of the many possible embodiments to which the principles of the disclosed subject matter may be applied, it should be recognized that the illustrated embodiments are only preferred examples and should not be taken as limiting the scope of the claims to those preferred examples. Rather, the scope of the claimed subject matter is defined by the following claims. We therefore claim as our invention all that comes within the scope of these claims.

## Claims

1. A block-based computing system (100; 900; 1000) comprising:
a plurality of processor cores comprising a first processor core (110; 905; 1005) configured to:
execute instructions of a first instruction block, wherein the first instruction block is an atomic collection of block-based processor instructions that includes an instruction block header and a plurality of instructions; and
in response to determining that a branch in the first instruction block will be taken, generate a target address pointing to a second instruction block before the first instruction block is committed; and
control logic (160; 920; 1020) configured to receive the target address pointing to the second instruction block and to initiate non-speculative execution of the second instruction block , before the first instruction block is committed, based on exit type information encoded in the header of the first instruction block and the target address, wherein the exit type information indicates a type of the branch.

2. The block-based computing system of claim 1, further comprising a resource shared by the plurality of processor cores, and wherein the control logic (160; 920; 1020) is further configured to prioritize access to the shared resource so that older non-speculative instruction blocks have priority to the resource over newer non-speculative instruction blocks and speculative instruction blocks.

3. The block-based computing system of any one of claims 1-2, wherein the initiating execution of the second instruction block comprises loading the second instruction block into a second core of the plurality of processor cores.

4. The block-based computing system of any one of claims 1-3, wherein the first instruction block is loaded in a first instruction window of the first core, and the initiating execution of the second instruction block comprises loading the second instruction block into a second instruction window of the first core.

5. A method of performing a branch in a block-based architecture, the block-based architecture comprising a plurality of processor cores for executing a plurality of instructions as an atomic block, the method comprising:
executing one or more instructions of a first instruction block using a first core of the block-based architecture, wherein the first instruction block is an atomic collection of block-based processor instructions that includes an instruction block header and a plurality of instructions;
in response to determining a branch will be taken, generating a target address pointing to a second instruction block;
evaluating exit type information stored in an instruction header of the first instruction block, wherein the exit type information indicates a types of the branch; and
before the first instruction block is committed, initiating non-speculative execution of instructions of the second instruction block based at least in part on the exit type information and the target address.

6. The method of claim 5, further comprising:
evaluating predicates for the instructions of the first instruction block; and
based at least in part on the predicate evaluation, performing the initiating.

7. The method of any one of claims 5-6, wherein the initiated, non-speculative execution comprises prefetching the second instruction block into a L1 cache of the block-based architecture.

8. The method of any one of claims 5-7, wherein the initiated, non-speculative execution comprises fetching the second instruction block into an instruction window of a second core of the block-based architecture (100; 900; 1000).

9. The method of any one of claims 5-8, wherein the second instruction block is loaded on a second core of the block-based architecture (830) before the initiating, and the initiated, non-speculative execution comprises refreshing the second instruction block loaded on the second core.

10. The method of any one of claims 5-9, wherein the initiated, non-speculative execution comprises prefetching a header of the second instruction block (840).

11. The method of any one of claims 5-10, further comprising:
prioritizing access requests to a shared resource of the block-based architecture so that older non-speculative instruction blocks have priority to the shared resource over newer non-speculative instruction blocks and speculative instruction blocks.

12. A computer-readable storage device or memory (1120; 1140; 1180) having instructions thereon for a block-based processor (100; 900; 1000) that when executed by the block-based processor, cause the block-based processor to perform the method of any one of the claims 5-11.

13. A computer-readable storage device or memory (1120; 1140; 1180) having instructions thereon for causing a processor (1110; 1190) to execute a method for compiling source code into machine code that is executable on a block-based computer architecture (100; 900; 1000), the block-based architecture comprising a plurality of processor cores for executing a plurality of instructions as an atomic block, the instructions comprising:
instructions to cause the processor to generate a stream of machine code instructions executable on the block-based computer architecture, the stream of machine code instructions divided into a plurality of instruction blocks, wherein each instruction block is an atomic collection of block-based processor instructions that includes an instruction block header and a plurality of instructions;
instructions to cause the processor to determine an exit type for a respective instruction block of the plurality of instruction blocks (610); and
instructions to cause the processor to encode the exit type for a respective instruction block in a header of the respective instruction block (620), wherein the exit type indicates a type of a branch instruction in the instruction block. (630)

## Patentansprüche

1. Blockbasiertes Computersystem (100; 900; 1000), umfassend:
eine Vielzahl von Prozessorkernen, die einen ersten Prozessorkern (110; 905; 1005) umfassen, der konfiguriert ist zum:
Ausführen von Befehlen eines ersten Befehlsblocks, wobei der erste Befehlsblock eine atomare Sammlung von blockbasierten Prozessorbefehlen ist, die einen Befehlsblockheader und eine Vielzahl von Befehlen beinhaltet; und
als Reaktion auf das Bestimmen, dass ein Zweig im ersten Befehlsblock genommen wird, Erzeugen einer Zieladresse, die auf einen zweiten Befehlsblock zeigt, bevor der erste Befehlsblock übertragen wird; und
Steuerlogik (160; 920; 1020), die konfiguriert ist, um die auf den zweiten Anweisungsblock zeigende Zieladresse zu empfangen und eine nichtspekulative Ausführung des zweiten Anweisungsblocks einzuleiten, bevor der erste Anweisungsblock übertragen wird, basierend auf Exit-Typ-Informationen, die im Header des ersten Anweisungsblocks und der Zieladresse kodiert sind,
wobei die Exit-Typ-Informationen einen Typ des Zweiges anzeigen.

2. Blockbasiertes Computersystem nach Anspruch 1, weiterhin umfassend eine Ressource, die von der Vielzahl von Prozessorkernen gemeinsam genutzt wird, und wobei die Steuerlogik (160; 920; 1020) weiterhin konfiguriert ist, um den Zugriff auf die gemeinsame Ressource zu priorisieren, so dass ältere nichtspekulative Anweisungsblöcke Vorrang vor neueren nichtspekulativen Anweisungsblöcken und spekulativen Anweisungsblöcken haben.

3. Blockbasiertes Computersystem nach einem der Ansprüche 1-2, wobei die initiierende Ausführung des zweiten Befehlsblocks das Laden des zweiten Befehlsblocks in einen zweiten Kern der Vielzahl von Prozessorkernen umfasst.

4. Blockbasiertes Computersystem nach einem der Ansprüche 1-3, wobei der erste Anweisungsblock in einem ersten Anweisungsfensterdes ersten Kerns geladenwird und die initiierende Ausführung des zweiten Anweisungsblocks das Laden des zweiten Anweisungsblocks in ein zweites Anweisungsfensterdes ersten Kerns umfasst.

5. Verfahren zum Durchführen eines Zweiges in einer blockbasierten Architektur, wobei die blockbasierte Architektur eine Vielzahl von Prozessorkernen zum Ausführen einer Vielzahl von Anweisungen als atomarer Block umfasst, wobei das Verfahren umfasst:
Ausführen eines oder mehrerer Befehle eines ersten Befehlsblocks unter Verwendung eines ersten Kerns der blockbasierten Architektur, wobei der erste Befehlsblock eine atomare Sammlung von blockbasierten Prozessorbefehlen ist, die einen Befehlsblockheader und eine Vielzahl von Befehlen beinhaltet;
als Reaktion auf das Bestimmen, dass ein Zweig genommen wird, Erzeugen einer Zieladresse, die auf einen zweiten Anweisungsblock zeigt;
Auswerten von Exit-Typ-Informationen, die in einem Befehlsheader des ersten Anweisungsblocks gespeichert sind, wobei die Exit-Typ-Informationen einen Typ des Zweiges anzeigen; und
bevor der erste Anweisungsblock übertragen wird, Initiieren einer nicht spekulativen Ausführung von Anweisungen des zweiten Anweisungsblocks, die zumindest teilweise auf der Exit-Typ-Information und der Zieladresse basiert.

6. Verfahren nach Anspruch 5, weiterhin umfassend:
Auswerten von Prädikaten für die Anweisungen des ersten Anweisungsblocks; und
zumindest teilweise auf der Grundlage der Prädikatsauswertung, Durchführung des Initiierens.

7. Verfahren nach einem der Ansprüche 5-6, wobei die initiierte, nichtspekulative Ausführung das Vorabrufen des zweiten Befehlsblocks in einen L1-Cache der blockbasierten Architektur umfasst.

8. Verfahren nach einem der Ansprüche 5-7, wobei die initiierte, nichtspekulative Ausführung das Abrufen des zweiten Befehlsblocks in ein Befehlsfenster eines zweiten Kerns der blockbasierten Architektur (100; 900; 1000) umfasst.

9. Verfahren nach einem der Ansprüche 5-8, wobei der zweite Befehlsblock vor dem Initiieren auf einen zweiten Kern der blockbasierten Architektur (830) geladen wird und die eingeleitete, nichtspekulative Ausführung das Aktualisieren des zweiten Befehlsblocks, der auf dem zweiten Kern geladen wird, umfasst.

10. Verfahren nach einem der Ansprüche 5-9, wobei die initiierte, nichtspekulative Ausführung das Vorabrufen eines Headers des zweiten Anweisungsblocks (840) umfasst.

11. Verfahren nach einem der Ansprüche 5-10, weiterhin umfassend:
Priorisieren von Zugriffsanforderungen auf eine gemeinsame Ressource der blockbasierten Architektur, so dass ältere nichtspekulative Befehlsblöcke Vorrang vor neueren nichtspekulativen Befehlsblöcken und spekulativen Befehlsblöcken haben.

12. Computerlesbare Speichervorrichtung oder Speicher (1120; 1140; 1180), die oder der Anweisungen für einen blockbasierten Prozessor (100; 900; 1000) aufweist, die, wenn sie durch den blockbasierten Prozessor ausgeführt werden, bewirken, dass der blockbasierte Prozessor das Verfahren nach einem der Ansprüche 5-11 ausführt.

13. Computerlesbare Speichervorrichtung oder Speicher (1120; 1140; 1180), die oder der Anweisungen darauf aufweist, um einen Prozessor (1110; 1190) zu veranlassen, ein Verfahren zum Kompilieren von Quellcode in Maschinencode auszuführen, der auf einer blockbasierten Computerarchitektur (100; 900; 1000) ausführbar ist, wobei die blockbasierte Architektur eine Vielzahl von Prozessorkernen zum Ausführen einer Vielzahl von Anweisungen als atomarer Block umfasst, wobei die Anweisungen umfassen:
Anweisungen, um den Prozessor zu veranlassen, einen Strom von Maschinencodeanweisungen zu erzeugen, die auf der blockbasierten Computerarchitektur ausführbar sind, wobei der Strom von Maschinencodeanweisungen in eine Vielzahl von Anweisungsblöcken unterteilt ist, wobei jeder Anweisungsblock eine atomare Sammlung von blockbasierten Prozessorbefehlen ist, die einen Befehlsblockheader und eine Vielzahl von Befehlen beinhaltet;
Anweisungen, um den Prozessor zu veranlassen, einen Exit-Typ für einen jeweiligen Befehlsblock der Vielzahlvon Befehlsblöcken (610) zu bestimmen; und
Anweisungen, um den Prozessor zu veranlassen, den Exit-Typ für einen entsprechenden Anweisungsblock in einem Header des jeweiligen Anweisungsblocks (620) zu kodieren, wobei der Exit-Typ einen Typ einer Verzweigungsanweisung in dem Anweisungsblock (630) anzeigt.

## Revendications

1. Système informatique à base de blocs (100; 900; 1000) comprenant :
une pluralité de cœurs de processeur comprenant un premier cœur de processeur (110 ; 905 ; 1005) configuré pour :
exécuter des instructions d'un premier bloc d'instructions, dans lequel le premier bloc d'instructions est une collection atomique d'instructions de processeur à base de blocs qui inclut un en-tête de bloc d'instructions et une pluralité d'instructions ; et
en réponse à la détermination qu'un branchement dans le premier bloc d'instructions sera pris, générer une adresse cible pointant sur un second bloc d'instructions avant que le premier bloc d'instructions soit engagé; et
une logique de commande (160; 920; 1020) configurée pour recevoir l'adresse cible pointant sur le second bloc d'instructions et pour lancer une exécution non spéculative du second bloc d'instructions, avant que le premier bloc d'instructions soit engagé, sur la base d'informations de type de sortie codées dans l'en-tête du premier bloc d'instructions et de l'adresse cible, dans lequel les informations de type de sortie indiquent un type du branchement.

2. Système informatique à base de blocs selon la revendication 1, comprenant en outre une ressource partagée par la pluralité de cœurs de processeur, et dans lequel la logique de commande (160 ; 920 ; 1020) est configurée en outre pour prioriser un accès à la ressource partagée de manière que des blocs d'instructions non spéculatifs plus anciens aient une priorité pour la ressource sur des blocs d'instructions non spéculatifs plus récents et des blocs d'instructions spéculatifs.

3. Système informatique à base de blocs selon l'une quelconque des revendications 1 à 2, dans lequel le lancement de l'exécution du second bloc d'instructions comprend le chargement du second bloc d'instructions dans un second cœur de la pluralité de cœurs de processeur.

4. Système informatique à base de blocs selon l'une quelconque des revendications 1 à 3, dans lequel le premier bloc d'instructions est chargé dans une première fenêtre d'instructions du premier cœur, et le lancement de l'exécution du second bloc d'instructions comprend le chargement du second bloc d'instructions dans une seconde fenêtre d'instructions du premier cœur.

5. Procédé de réalisation d'un branchement dans une architecture à base de blocs, l'architecture à base de blocs comprenant une pluralité de cœurs de processeur pour exécuter une pluralité d'instructions comme un bloc atomique, le procédé comprenant :
l'exécution d'une ou plusieurs instructions d'un premier bloc d'instructions en utilisant un premier cœur de l'architecture à base de blocs, dans lequel le premier bloc d'instructions est une collection atomique d'instructions de processeur à base de blocs qui inclut un en-tête de bloc d'instructions et une pluralité d'instructions ;
en réponse à la détermination qu'un branchement sera pris, la génération d'une adresse cible pointant sur un second bloc d'instructions ;
l'évaluation d'informations de type de sortie stockées dans un en-tête d'instructions du premier bloc d'instructions, dans lequel les informations de type de sortie indiquent un type du branchement ; et
avant que le premier bloc d'instructions soit engagé, le lancement d'une exécution non spéculative d'instructions du second bloc d'instructions sur la base au moins en partie des informations de type de sortie et de l'adresse cible.

6. Procédé selon la revendication 5, comprenant en outre :
l'évaluation de prédicats pour les instructions du premier bloc d'instructions ; et
sur la base au moins en partie de l'évaluation de prédicats, la réalisation du lancement.

7. Procédé selon l'une quelconque des revendications 5 à 6, dans lequel l'exécution non spéculative lancée comprend la pré-extraction du second bloc d'instructions dans une mémoire cache de L1 de l'architecture à base de blocs.

8. Procédé selon l'une quelconque des revendications 5 à 7, dans lequel l'exécution non spéculative lancée comprend l'extraction du second bloc d'instructions dans une fenêtre d'instructions d'un second cœur de l'architecture à base de blocs (100 ; 900 ; 1000).

9. Procédé selon l'une quelconque des revendications 5 à 8, dans lequel le second bloc d'instructions est chargé sur un second cœur de l'architecture à base de blocs (830) avant le lancement, et l'exécution non spéculative lancée comprend le rafraîchissement du second bloc d'instructions chargé sur le second cœur.

10. Procédé selon l'une quelconque des revendications 5 à 9, dans lequel l'exécution non spéculative lancée comprend la pré-extraction d'un en-tête du second bloc d'instructions (840).

11. Procédé selon l'une quelconque des revendications 5 à 10, comprenant en outre :
la priorisation de requêtes d'accès à une ressource partagée de l'architecture à base de blocs de manière que des blocs d'instructions non spéculatifs plus anciens aient une priorité pour la ressource partagée sur des blocs d'instructions non spéculatifs plus récents et des blocs d'instructions spéculatifs.

12. Dispositif de stockage lisible par ordinateur ou mémoire (1120; 1140; 1180) présentant dessus des instructions pour un processeur à base de blocs (100 ; 900 ; 1000) qui, quand elles sont exécutées par le processeur à base de blocs, amènent le processeur à base de blocs à réaliser le procédé selon l'une quelconque des revendications 5 à 11.

13. Dispositif de stockage lisible par ordinateur ou mémoire (1120; 1140; 1180) présentant dessus des instructions pour amener un processeur (1110 ; 1190) à exécuter un procédé pour compiler un code source en un code machine qui est exécutable sur une architecture d'ordinateur à base de blocs (100 ; 900 ; 1000), l'architecture à base de blocs comprenant une pluralité de cœurs de processeur pour exécuter une pluralité d'instructions comme un bloc atomique, les instructions comprenant :
des instructions pour amener le processeur à générer un flux d'instructions de code machine exécutables sur l'architecture d'ordinateur à base de blocs, le flux d'instructions de code machine étant divisé en une pluralité de blocs d'instructions, dans lequel chaque bloc d'instructions est une collection atomique d'instructions de processeur à base de blocs qui inclut un en-tête de bloc d'instructions et une pluralité d'instructions;
des instructions pour amener le processeur à déterminer un type de sortie pour un bloc d'instructions respectif de la pluralité de blocs d'instructions (610) ; et
des instructions pour amener le processeur à coder le type de sortie pour un bloc d'instructions respectif dans un en-tête du bloc d'instructions respectif (620), dans lequel le type de sortie indique un type d'une instruction de branchement dans le bloc d'instructions (630).
